# EUROPEAN PATENT APPLICATION

(11) **EP 4 156 556 A1**
(43) Date of publication of application: **29.03.2023**
(21) Application number: 21818746.6
(22) Date of filing: 25.05.2021
(51) Int. Cl.: H04B 17/00

(54) **TARGET OBJECT SENSING METHOD AND APPARATUS**

(30) Priority: 30.05.2020 CN 202010480870
(71) Applicant: Huawei Technologies Co., Ltd., Longgang District, Shenzhen, Guangdong 518129 (CN)
(72) Inventor: DU, Rui, Shenzhen, Guangdong 518129 (CN); TIAN, Youli, Chengdu, Sichuan 611756 (CN); HUANG, Guogang, Shenzhen, Guangdong 518129 (CN); HAN, Xiao, Shenzhen, Guangdong 518129 (CN); LIU, Chenchen, Shenzhen, Guangdong 518129 (CN); ZHANG, Meihong, Shenzhen, Guangdong 518129 (CN); DENG, Cailian, chengdu, Sichuan 611756 (CN); YAN, Li, chengdu, Sichuan 611756 (CN); TAN, Danny Kai Pin, Shenzhen, Guangdong 518129 (CN); SUN, Yingxiang, Shenzhen, Guangdong 518129 (CN)
(74) Representative: Gill Jennings & Every LLP
(86) International application number: PCT/CN2021/095803
(87) International publication number: WO 2021/244353

(57) **Abstract**

This application relates to the field of terminal technologies, and discloses a method and an apparatus for sensing a target object, to perform finer sensing on the target object and obtain a more precise sensing result. A first device sends a first sensing result to a second device. The first sensing result is obtained by the first device by sensing a target object in a first frequency range. The first device receives a second sensing result fed back by the second device. The second sensing result is obtained by the second device by sensing the target object in a second frequency range based on the first sensing result. The first frequency range is different from the second frequency range. The first device determines status information of the target object based on the first sensing result and the second sensing result. A more precise sensing result can be obtained by sensing the target object on different frequency bands.

## Description

### CROSS-REFERENCE TO RELATED APPLICATION

This application claims priority to Chinese Patent Application No. 202010480870.9, filed with the China National Intellectual Property Administration on May 30, 2020 and entitled "METHOD AND APPARATUS FOR SENSING TARGET OBJECT", which is incorporated herein by reference in its entirety.

### TECHNICAL FIELD

The present invention relates to the field of terminal technologies, and in particular, to a method and an apparatus for sensing a target object.

### BACKGROUND

Wireless local area network (wireless local area network, WLAN) sensing (Sensing) is a technology that uses WLAN signals for motion detection. A physical device may extract information about a surrounding environment by using a capability of measuring and sampling the surrounding environment of radio.

Existing IEEE 802.11 series standards include mainstream low frequency band (for example, 2.4 GHz and 5 GHz) related standards (for example, 802.11n, 802.11ac, and 802.11ax) and high frequency band (for example, 60 GHz) related standards (for example, 802.11ad and 802.11ay). Physical devices can use the WLAN sensing technology to sense target objects based on these standards. Existing WLAN sensing is generally performed on only a low frequency or a high frequency, and finer sensing cannot be performed on a target object, resulting in a poor sensing result.

### SUMMARY

Embodiments of this application provide a method and an apparatus for sensing a target object, so as to perform finer sensing on the target object and obtain a more precise sensing result.

According to a first aspect, a method for sensing a target object is provided, including the following process: A first device sends a first sensing result to a second device. The first sensing result is obtained by the first device by sensing a target object in a first frequency range. The first device receives a second sensing result fed back by the second device. The second sensing result is obtained by the second device by sensing the target object in a second frequency range based on the first sensing result. The first frequency range is different from the second frequency range. The first device determines status information of the target object based on the first sensing result and the second sensing result.

As the initiator of the sensing process, the first device may first sense the target object in the first frequency range of the first device, and send the first sensing result to the second device. The second device senses the target object in the second frequency range of the second device based on the first sensing result, to obtain the sensing result. The first frequency range is different from the second frequency range. Therefore, the first device can combine sensing results in at least two frequency ranges, to obtain a more precise sensing result.

It should be noted that, in embodiments of this application, only an example in which the initiator performs combination is used for description. In an actual sensing process, a participant may also combine a plurality of sensing results, provided that the initiator negotiates with the participant before the sensing process.

In a possible design, the first frequency range is a low frequency range of the first device, and the second frequency range is a high frequency range of the second device.

In this design, the WLAN sensing process may be performed based on coordination between the high frequency and the low frequency. Because sensing results at high and low frequencies are shared, sensing on the high frequency may be performed based on the sensing result at the low frequency, thereby saving time of omnidirectional sweeping at the high frequency, effectively improving sensing coverage at the high frequency, and improving sensing precision.

In a possible design, the first device may further send first indication information to a third device, where the first indication information is used to invoke or request the third device to sense the target object. The first device may further receive a third sensing result fed back by the third device, where the third sensing result is obtained by the third device by sensing the target object in a third frequency range. The third frequency range is different from the first frequency range.

The second device and the third device may be considered as participants in the sensing process.

In this design, if it is detected that a device supporting sensing exists near the target object, the device may be temporarily invoked or requested to participate in an original sensing process (that is, a sensing process before the device is added), so as to obtain a more accurate and precise sensing result. In addition, in this application, a device participating in sensing may be added at any time in a sensing process, to implement different sensing precision, so as to meet requirements of different application requirements or different service requirements for sensing precision without affecting an original sense process.

In a possible design, the third frequency range is a high frequency range of the third device.

In a possible design, before the first device receives the third sensing result fed back by the third device, the first device may further send second indication information to the third device, where the second indication information is used to schedule the third device to an SP, and the SP is an SP of the second device or an SP allocated to the third device.

Optionally, if the first device is an AP, the first device may directly schedule the third device to an SP of the first device and the second device, or the first device may allocate a new SP to the third device.

Alternatively, optionally, if the first device is a STA, the third device may actively apply to an associated AP for an extended SP, and the associated AP allocates a new SP to the third device.

In a possible design, the first device may further send third indication information to the second device and the third device, where the third indication information indicates the second device and the third device to feed back sensing results, or the third device indication information indicates the second device and the third device to feed back sensing results in turn.

In a possible design, the first sensing result includes one or more of the following information: a range between the target object and the first device, an angle of the target object relative to the first device, a velocity of the target object, or signal strength of the target object that is received by the first device.

In a possible design, when the first device sends the first sensing result, the first device may send a first instruction, where the first instruction carries the first sensing result, and the first instruction instructs a participant to sense the target object based on the first sensing result.

The first instruction may further carry a frequency range of a participant, and indicates the participant to sense the target object in the frequency range of the participant based on the first sensing result. For example, the frequency range of the participant may include the second frequency range of the second device and/or the third frequency range of the third device.

The first instruction may further carry feedback indication information indicating a participant (including the second device and/or the third device) to feed back a sensing result in a high frequency range or the low frequency range of the first device. In other words, the feedback indication information indicates a frequency range of the first device in which the participant feeds back the second sensing result.

Optionally, in this application, a new frame structure, namely, WLAN sensing indication frame (Indication frame) is designed, and the first instruction may be a WLAN sensing indication frame.

In a possible design, when the first device sends the first indication information to the third device, the first device sends a second instruction to the third device, where the second instruction carries the first indication information.

The second instruction may further include one or more of the following information: frequency band information, channel information, the first sensing result, feedback indication information, a role of the first device, sensing duration, a sensing interval, or a sensing mode.

Optionally, in this application, a new frame structure, namely, WLAN sensing request frame (Request frame) is designed, and the second instruction may be a WLAN sensing request frame.

In a possible design, when the first device receives the sensing result fed back by the participant, the first device may receive a third instruction sent by the participant, where the third instruction carries the sensing result of the participant. For example, the sensing result of the participant may include the second sensing result of the second device and/or the third sensing result of the third device.

The third instruction may further include one or more of the following information: a range between the target object and the participant (including the second device and/or the third device), an angle of the target object relative to the participant (including the second device and/or the third device), a velocity of the target object, a sector in which the target object is located, a frequency band bandwidth, or feedback indication information.

Optionally, in this application, a new frame structure, namely, WLAN sensing feedback frame (Feedback frame) is designed, and the third instruction may be a WLAN sensing feedback frame.

In a possible design, when the first device sends the third indication information to the participant, the first device may send a fourth instruction to the participant, where the fourth instruction carries the third indication information, and the fourth instruction instructs participants to feed back sensing results in turn. For example, the fourth instruction instructs the second device and the third device to feed back sensing results in turn.

The fourth instruction may further include one or more of the following information: sequence control information, timestamp control information, indication information of a range between the target object and the participant (including the second device and/or the third device), indication information of an angle of the target object relative to the participant (including the second device and/or the third device, indication information of a velocity of the target object, indication information of a sector in which the target object is located, or indication information of a frequency band bandwidth. The indication information of the range indicates the participant to feed back the range between the target object and the participant. The indication information of the angle indicates the participant to feed back the angle between the target object and the participant. The indication information of the velocity indicates the participant to feed back a velocity of the target object. The indication information of the sector indicates the participant to feed back the sector in which the target object is located. The indication information of the frequency band bandwidth indicates the participant to feed back the frequency range on which the participant performs sensing.

Optionally, in this application, a new frame structure, namely, WLAN sensing poll frame (Poll frame) is designed, and the fourth instruction may be a WLAN sensing poll frame.

In a possible design, when the first device sends the third indication information to the participant, the first device may send a fifth instruction to the participant, where the fifth instruction carries the third indication information, and the fourth instruction instructs participants to feed back sensing results. For example, the fifth instruction instructs the second device and the third device to feed back sensing results.

The fifth instruction may further include one or more of the following information: indication information of a range between the target object and the participant (the second device and/or the third device), indication information of an angle of the target object relative to the participant (the second device and/or the third device), indication information of a velocity of the target object, indication information of a sector in which the target object is located, or indication information of a frequency band bandwidth.

Optionally, in this application, a new frame structure, namely, WLAN sensing trigger frame (Trigger frame) is designed, and the fifth instruction may be a WLAN sensing trigger frame.

In a possible design, an on-channel tunnel OCT technology is used between the initiator (for example, the first device) and the participant (for example, the second device and/or the third device) for information sharing between the high frequency and the low frequency, so that WLAN sensing can be seamlessly switched between the high frequency and the low frequency, thereby reducing a frequency band switching time and improving a switching success rate.

The OCT technology may further support broadcast or groupcast, so that the first device can simultaneously send the sensing result at the low frequency to high frequencies of a plurality of devices for sensing at the high frequencies. In this way, information of the target object at more dimensions can be obtained, and a sensing result of the target object is more accurate and precise.

In addition, a time for occupying air transmission (that is, transmission on an air interface) can be reduced by using the OCT technology, transmission overheads can be reduced, and deterioration of network performance can be avoided.

According to a second aspect, a method for sensing a target object is provided, including the following process: A second device receives a first sensing result, where the first sensing result is obtained by a first device by sensing the target object in a first frequency range. The second device feeds back a second sensing result to the first device. The second sensing result is obtained by the second device by sensing the target object in the second frequency range based on the first sensing result. The first frequency range is different from the second frequency range.

In a possible design, the first frequency range is a low frequency range of the first device, and the second frequency range is a high frequency range of the second device.

In a possible design, before the second device feeds back the second sensing result to the first device, the second device may further receive third indication information from the first device. The third indication information indicates a participant to feed back a sensing result, or indicates participants to feed back sensing results in turn.

In a possible design, the first sensing result includes one or more of the following information: a range between the target object and the first device, an angle of the target object relative to the first device, a velocity of the target object, or signal strength of the target object that is received by the first device.

In a possible design, when the second device receives the first sensing result, the second device may receive a first instruction, where the first instruction carries the first sensing result, the first instruction carries the first sensing result, and the first instruction instructs the participant to sense the target object based on the first sensing result.

The first instruction may further carry a frequency range of a participant, and indicates the participant to sense the target object in the frequency range of the participant based on the first sensing result. For example, the frequency range of the participant may include the second frequency range of the second device and/or the third frequency range of the third device.

The first instruction may further carry feedback indication information indicating the participant to feed back a sensing result in a high frequency range or the low frequency range of the first device. In other words, the feedback indication information indicates a frequency range of the first device in which the participant feeds back the second sensing result.

In a possible design, as the second device feeds back the second sensing result to the first device, the second device may send a third instruction to the first device, where the third instruction carries the second sensing result.

The third instruction may further include one or more of the following information: a range between the target object and the second device, an angle of the target object relative to the second device, a velocity of the target object, a sector in which the target object is located, a frequency band bandwidth, or feedback indication information.

In a possible design, as the second device receives the third indication information from the first device, the second device may receive a fourth instruction, where the fourth instruction carries the third indication information, and the fourth instruction instructs participants to feed back sensing results in turn.

The fourth instruction may further include one or more of the following information: sequence control information, timestamp control information, indication information of a range between the target object and the participant, indication information of an angle of the target object relative to the participant, indication information of a velocity of the target object, indication information of a sector in which the target object is located, or indication information of a frequency band bandwidth.

In a possible design, as the second device receives the third indication information from the first device, the second device may receive a fifth instruction, where the fifth instruction carries the third indication information, and the fifth instruction instructs the participant to feed back the sensing result.

The fifth instruction may further include one or more of the following information: indication information of a range between the target object and the participant, indication information of an angle of the target object relative to the participant, indication information of a velocity of the target object, indication information of a sector in which the target object is located, or indication information of a frequency band bandwidth.

According to a third aspect, a method for sensing a target object is provided, including the following process: A third device receives first indication information, where the first indication information is used to invoke or request the third device to perform sensing. The third device feeds back a third sensing result to a first device, where the third sensing result is obtained by the third device by sensing the target object in a third frequency range.

In a possible design, the third frequency range is a high frequency range of the third device.

In a possible design, before the third device feeds back the third sensing result to the first device, the third device may further receive second indication information from the first device, where the second indication information is used to schedule the third device to an SP, and the SP is an SP of a second device or an SP allocated to the third device.

Optionally, if the first device is an AP, the first device may directly schedule the third device to an SP of the first device and the second device, or the first device may allocate a new SP to the third device.

In a possible design, before the third device feeds back the third sensing result to the first device, the third device may further send first request information to an AP, where the first request information is used to request the AP to allocate an SP to the third device, and the AP is associated with the third device, that is, the AP is an associated AP of the third device.

Optionally, the first device is a STA.

In a possible design, before the third device feeds back the third sensing result to the first device, the third device may further receive third indication information from the first device. The third indication information indicates the second device and the third device to feed back sensing results, or the third device indication information indicates the second device and the third device to feed back sensing results in turn.

In a possible design, as the third device receives the third indication information, the third device receives a fourth instruction, where the fourth instruction carries the third indication information, and the fourth instruction instructs participants to feed back sensing results in turn.

The fourth instruction may further include one or more of the following information: sequence control information, timestamp control information, indication information of a range between the target object and the participant, indication information of an angle of the target object relative to the participant, indication information of a velocity of the target object, indication information of a sector in which the target object is located, or indication information of a frequency band bandwidth.

In a possible design, as the third device receives the third indication information, the third device receives a fifth instruction, where the fifth instruction carries the third indication information, and the fifth instruction instructs a participant to feed back a sensing result. For example, the fifth instruction instructs the second device and the third device to feed back sensing results.

The fifth instruction may further include one or more of the following information: indication information of a range between the target object and the participant (the second device and/or the third device), indication information of an angle of the target object relative to the participant (the second device and/or the third device), indication information of a velocity of the target object, indication information of a sector in which the target object is located, or indication information of a frequency band bandwidth.

In a possible design, the first sensing result includes one or more of the following information: a range between the target object and the first device, an angle of the target object relative to the first device, a velocity of the target object, or signal strength of the target object that is received by the first device.

According to a fourth aspect, an apparatus for sensing a target object is provided. The apparatus provided in this application has functions of implementing the device in the foregoing method aspect, and includes a corresponding component (means) configured to perform the steps or functions described in the foregoing method aspect. The steps or the functions may be implemented by using software, hardware (for example, a circuit), or a combination of hardware and software.

In a possible design, the apparatus includes one or more processors and a communication unit. The one or more processors are configured to support the apparatus to perform corresponding functions of the device in the foregoing method.

Optionally, the apparatus may further include one or more memories. The memory is configured to be coupled to the processor, and store program instructions and/or data that are/is necessary for the apparatus. The one or more memories may be integrated with the processor, or may be disposed independent of the processor. This is not limited in this application.

In another possible design, the apparatus includes a transceiver, a processor, and a memory. The processor is configured to control the transceiver or the input/output circuit to receive and send a signal. The memory is configured to store a computer program. The processor is configured to run the computer program in the memory, so that the apparatus performs the method completed by the device in any possible implementation of each aspect.

In a possible design, the apparatus includes one or more processors and a communication unit. The one or more processors are configured to support the apparatus to perform corresponding functions of the device in the foregoing method.

Optionally, the apparatus may further include one or more memories. The memory is configured to be coupled to the processor, and store program instructions and/or data that are/is necessary for the device. The one or more memories may be integrated with the processor, or may be disposed independent of the processor. This is not limited in this application.

The apparatus may be located in a device, or may be a device.

In another possible design, the apparatus includes a transceiver, a processor, and a memory. The processor is configured to control the transceiver or the input/output circuit to receive and send a signal. The memory is configured to store a computer program. The processor is configured to run the computer program in the memory, so that the apparatus performs the method completed by the device in any possible implementation of each aspect.

According to a fifth aspect, a computer-readable storage medium is provided and is configured to store a computer program. The computer program includes instructions used to perform the method in any possible implementation of the foregoing aspects.

According to a sixth aspect, a computer program product is provided. The computer program product includes computer program code. When the computer program code is run on a computer, the computer is enabled to perform the method in any possible implementation of the foregoing aspects.

According to a seventh aspect, a communication system is provided. The system includes the foregoing first device and second device.

Optionally, the system may further include a third device.

According to an eighth aspect, this application provides a chip system. The chip system includes a transceiver, configured to implement functions of the device in the methods in the foregoing aspects, for example, receive or send data and/or information in the foregoing methods. In a possible design, the chip system further includes a memory. The memory is configured to store program instructions and/or data. The chip system may include a chip, or may include a chip and another discrete component.

### BRIEF DESCRIPTION OF DRAWINGS

FIG. 1A and FIG. 1B are a schematic diagram of a communication process based on an OCT technology;
FIG. 2 is a frame schematic diagram of a structure of an OCT primitive;
FIG. 3 is a diagram of an architecture of a network system to which embodiments of this application are applied;
FIG. 4 is a schematic diagram of a sensing result;
FIG. 5 is a schematic diagram of a sensing result;
FIG. 6 is a schematic diagram of a sensing result;
FIG. 7 is a schematic flowchart of target object sensing to which an embodiment of this application is applicable;
FIG. 8 is a schematic diagram of a frame structure of a sensing indication frame to which an embodiment of this application is applicable;
FIG. 9 is a schematic diagram of a frame structure of a sensing poll feedback frame to which an embodiment of this application is applicable;
FIG. 10 is a schematic diagram of a frame structure of a sensing request frame to which an embodiment of this application is applicable;
FIG. 11 is a schematic flowchart of target object sensing to which an embodiment of this application is applicable;
FIG. 12 is a schematic diagram of a frame structure of a sensing feedback frame to which an embodiment of this application is applicable;
FIG. 13 is a schematic diagram of a frame structure of an OCT frame to which an embodiment of this application is applicable;
FIG. 14 is a schematic flowchart of target object sensing to which an embodiment of this application is applicable;
FIG. 15 is a schematic flowchart of target object sensing to which an embodiment of this application is applicable;
FIG. 16 is a schematic flowchart of target object sensing to which an embodiment of this application is applicable;
FIG. 17 is a schematic flowchart of target object sensing to which an embodiment of this application is applicable;
FIG. 18 is a diagram of an apparatus for sensing a target object to which an embodiment of this application is applicable; and
FIG. 19 is a diagram of an apparatus for sensing a target object to which an embodiment of this application is applicable.

### DESCRIPTION OF EMBODIMENTS

The following further describes in detail this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, the word "example" in embodiments of this application is used to represent giving an example, an illustration, or a description. Any embodiment or design described as an "example" in this application should not be explained as being more preferred or having more advantages than another embodiment or design. Exactly, the word "example" is used to present a concept in a specific manner.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes some terms in embodiments of this application, to facilitate understanding of a person skilled in the art.
(1) A WLAN sensing technology is a technology in which motion detection is performed by using a WLAN signal. WLAN sensing is based on existing WLAN standards, hardware, basic devices, and deployment. It is applicable to sensing of a target object in indoor environments. A physical device (which may be referred to as a device for short) may extract information about a surrounding environment by using a capability of measuring and sampling the surrounding environment of radio. A WLAN includes a plurality of devices within a specified communication range. All transmitters (a plurality of devices that transmit signals) can be used to form a multi-static radar system, and each device can perform motion detection and provide information. The information may be used to detect the target object.

In a sensing process of the target object, a device that initiates sensing may be referred to as an initiator, and a device that participates in sensing may be referred to as a participant. The participant may include a device that participates in the sensing process from the beginning, and may include a device that is temporarily invoked to participate in sensing.

The IEEE 802.11 series standards include mainstream low frequency band (for example, 2.4 GHz and 5 GHz) related standards (for example, 802.11n, 802.11ac, and 802.11ax) and high frequency band (for example, 60 GHz) related standards (for example, 802.11ad and 802.11ay). WLAN sensing can be performed based on IEEE 802.11 series standards. WLAN sensing on a low frequency band and WLAN sensing on a high frequency band have respective advantages and disadvantages. For example, on the low frequency band, sensing coverage is wide, a bandwidth is limited, and detection precision is low. On the high frequency band, sensing coverage is limited, a bandwidth is wide, and detection precision is high. A future wireless local area network will be a complex and integrated network. In this application, with reference to advantages of the low frequency band and the high frequency band, an opportunity that WLAN sensing on the high frequency band and WLAN sensing on the low frequency band can be coordinated is fully utilized; a more reasonable and efficient high-frequency and low-frequency coordinated WLAN sensing mechanism is designed, to provide a more robust WLAN sensing service with a higher speed.

It may be understood that a sensing process of a target object in embodiments of this application may also be understood as a measurement process of the target object. In this application, a sensing process of the target object includes at least two subprocesses: a sensing phase and a feedback (Feedback) phase.

(2) A device, also referred to as a physical device, a wireless device, or a node in embodiments of this application, is a device used to assist a user in selecting and controlling various smart home devices at home, includes a smart home device (for example, a smart television or a smart speaker) and a terminal used by the user, and may further include a third-party device such as a router connected to the home device. In this application, a role of the device may further include an access point (access point, AP) and/or a station (station, STA).

The smart home device means various home devices applied to smart home, for example, smart anti-theft series products. For the smart anti-theft series products, various alarms and detectors mainly coordinate with each other, and trigger alarm information in a deployment state, thereby implementing security anti-theft. The smart home device may also be an intelligent lighting product. A user may easily view and control a switch of a lighting device at home by directly using a terminal such as a mobile phone or a tablet computer. The smart home device may also be a home appliance control product. A smart home appliance controller may associate infrared wireless signals, and control, via a terminal, any device that uses infrared remote control, for example, a television, an air conditioner, or an electric curtain. In addition, the smart home device may also be an air quality sensor. A user may conveniently view, on an application program (APP) on a terminal, indoor temperature and humidity, and an environment monitored by the air quality sensor, and may work with another electrical device at home to improve an indoor environment, thereby providing better experience for the user. The smart home device may further be a mobile phone smart lock. A user only needs to take out a terminal such as a mobile phone or a tablet computer, and enter a password to automatically unlock a door. In addition, the user may remotely unlock the door for family members or visitors.

A router, also called a smart host or home gateway, is a hardware device used to connect two or more networks and functions as a gateway between networks. The router is a dedicated intelligent network device that reads an address of each data packet and determines how to transmit the data packet. Through wireless connection to a host, the router can be easily controlled by a terminal such as a mobile phone or tablet. Generally, a router provides a Wi-Fi hotspot. Smart home devices and terminals access a Wi-Fi network by connecting to the Wi-Fi hotspot of the router. Routers connected to the smart home devices and terminals may be the same or different.

A terminal is a device on which a smart home app is installed and configured to control a smart home device. For example, the terminal may be a portable device, such as a mobile phone, a tablet computer, an artificial intelligence (artificial intelligence, AI) intelligent voice terminal, a wearable device, or an augmented reality (augmented reality, AR)/virtual reality (virtual reality, VR) device. The portable device includes but is not limited to a portable device equipped with IOS^{®}, Android^{®}, Microsoft^{®}, or another operating system. The user may control a smart home device at home by using the smart home app installed on the terminal.

Optionally, to implement high-frequency and low-frequency coordination, the device in embodiments of this application can simultaneously support (at least two) transceiver modules, and (the at least) two transceiver modules may separately operate on different frequencies; one transceiver module operates on a low frequency band (for example, 2.4 GHz and 5 GHz), and one transceiver module operates on a high frequency band (for example, 6 GHz).

It may be understood that, in a signaling design and an interaction procedure in this application, a function of a device supporting a high-frequency and low-frequency coordination framework protocol may be enhanced by using software.

An on-channel tunneling (On-Channel Tunneling, OCT) technology may enable a STA in a multi-band capable device to send media access control Management Protocol data units (medium access control management protocol data unit, MMPDU) constructed by different STAs in the same device. A station management entity (station management entity, SME) of the multi-band capable device may instruct its MAC sublayer management entity (MAC sublayer management entity, MLME) to use an OCT service to communicate with a peer MLME in the multi-band device. An MLME of a STA that sends or receives an OCT MMPDU via a wireless medium is referred to as a TR-MLME. In MLMEs of a STA that does not perform a sending operation, an MLME that constructs an OCT MMPDU and a destination MLME of the OCT MMPDU are referred to as NT-MLMEs. An MMPDU is encapsulated to transmit the MMPDU to an MLME of a peer STA in the same multi-band capable device.

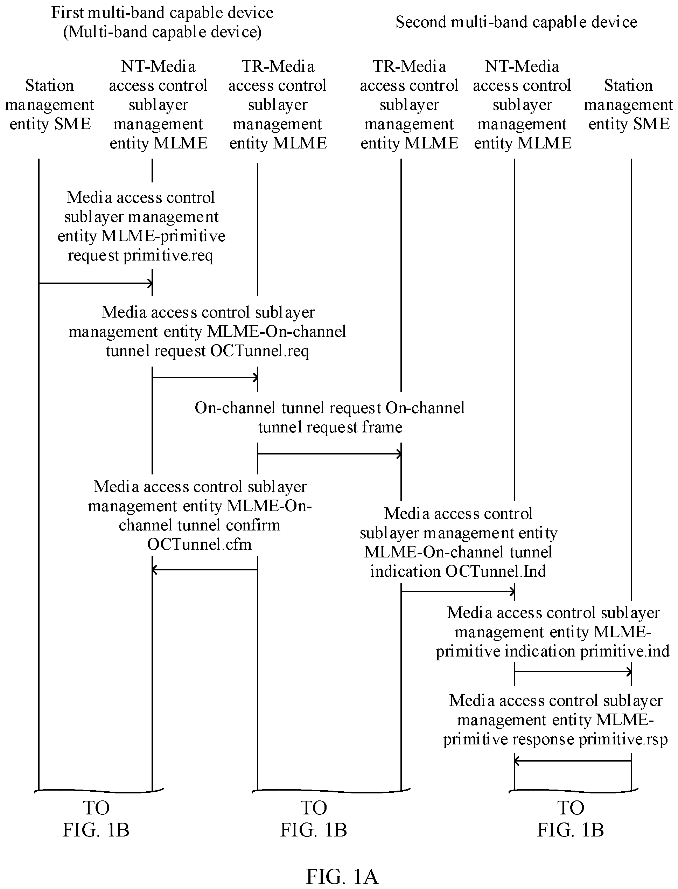

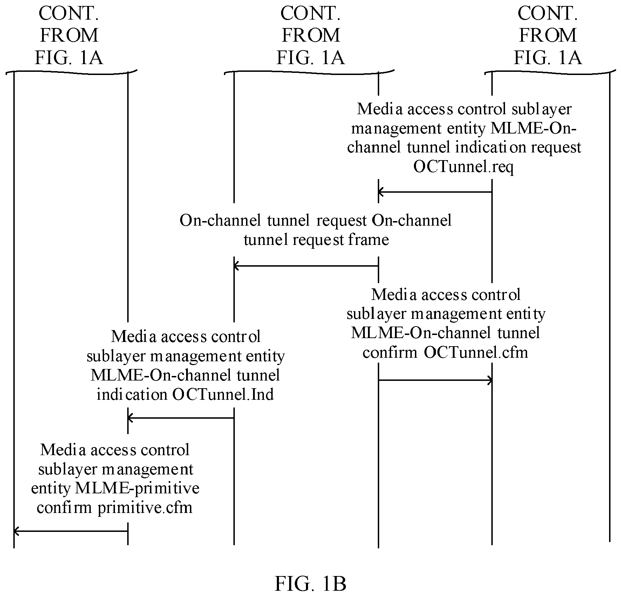

For an OCT communication process, refer to FIG. 1A and FIG. 1B. An OCT process further includes an operation related to an inter-band primitive. An SME of a first multi-band capable device (Multi-band capable device) sends information of an MLME-primitive request (primitive.req) to an NT-MLME in the first multi-band capable device. The NT-MLME in the first multi-band capable device encapsulates a primitive request into an MLME-OCTunnel.request primitive and sends the MLME-OCTunnel.request primitive, where the MLME-OCTunnel.request primitive is used to request transmission of an on-channel tunnel request frame (MLME-OCTunnel.req primitive for short). The NT-MLME in the first multi-band capable device may further receive an MLME-OCTunnel.confirm primitive (MLME-OCTunnel.cfm primitive for short). The MLME-OCTunnel.confirm primitive is used to report a result of requesting of transmission the on-channel tunnel request frame. The MLME-OCTunnel.confirm primitive is of an enumeration type, and the result includes success (SUCCESS) or failure (FAILURE). A TR-MLME in the first multi-band capable device sends an on-channel tunnel request frame, where the on-channel tunnel request frame is used to transmit a management frame between peer MLME entities in multi-band capable devices.

A TR-MLME in a second multi-band capable device sends an MLME-OCTunnel.indication primitive (MLME-OCTunnel.Ind primitive for short), where the MLME-OCTunnel.indication primitive is used to indicate that the On-channel Tunnel Request frame has been received. An NT-MLME in the second multi-band capable device sends an MLME-primitive indication (primitive.ind) to an SME of the second multi-band capable device. The SME of the second multi-band capable device sends an MLME-primitive response (primitive.rsp). The NT-MLME in the second multi-band capable device encapsulates the primitive response into an MLME-OCTunnel.request primitive and sends the MLME-OCTunnel.request primitive. The NT-MLME in the second multi-band capable device may further receive an MLME-OCTunnel.confirm primitive. The TR-MLME in the second multi-band capable device sends an on-channel tunnel request frame. The TR-MLME in the first multi-band capable device sends an MLME-OCTunnel.indication primitive. The NT-MLME in the first multi-band capable device sends information of an MLME-primitive confirm (primitive.cfm) to the SME of the first multi-band capable device.

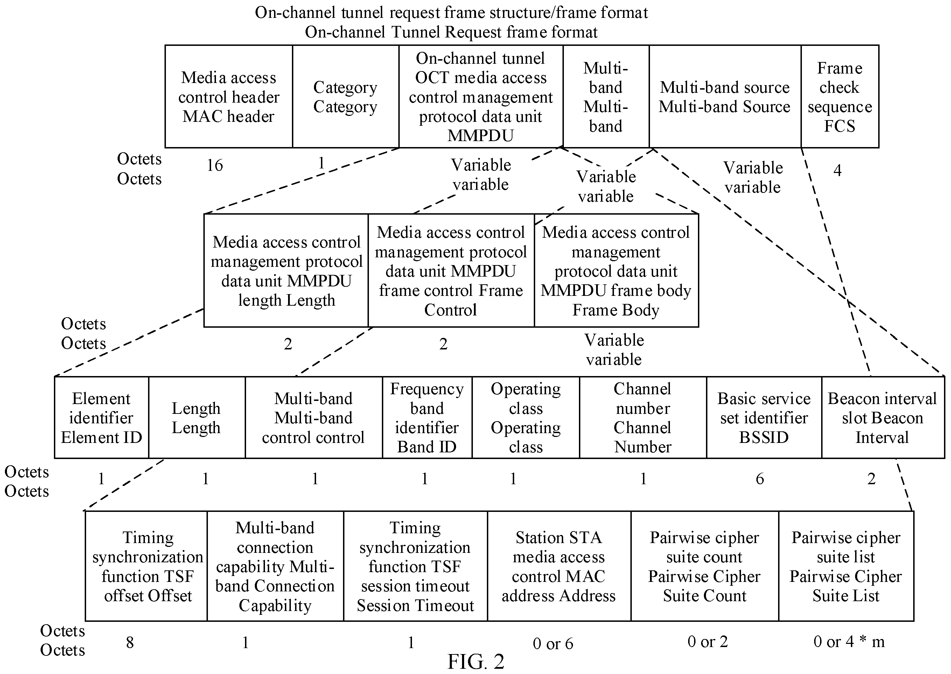

A frame structure of the on-channel tunnel request frame is shown in FIG. 2. The on-channel tunnel request frame includes a MAC header (header) field (occupying 16 bytes), a category (Category) field (occupying 1 byte), an OCT MMPDU field (occupying an unfixed and variable quantity of bytes), a multi-band (Multi-band) field (occupying an unfixed and variable quantity of bytes), a multi-band source (Multi-band Source) field (occupying a variable (variable and unfixed) quantity of bytes), and a frame check sequence (frame check sequence, FCS) (occupying 4 bytes). The OCT MMPDU field includes an MMPDU length (Length) subfield (occupying 2 bytes), an MMPDU frame control (Frame Control) subfield (occupying 2 bytes), and an MMPDU frame body (Frame Body) (occupying an unfixed and variable quantity of bytes). The multi-band field includes an element identifier (Element ID) subfield (occupying 1 byte), a length subfield (occupying 1 byte), a multi-band control subfield (occupying 1 byte), a band identifier (Band ID) subfield (occupying 1 byte), an operating class (Operating class) subfield (occupying 1 byte), a channel number (Channel Number) subfield (occupying 1 byte), a basic service set identifier (basic service set identifier, BSSID) subfield (occupying 1 byte), and a beacon interval (Beacon Interval) subfield (occupying 2 bytes), where a BSSID may be generally used to indicate a MAC address of an AP. The multi-band source field includes a timing synchronization function (timing synchronization function, TSF) offset (Offset) subfield (occupying 8 bytes), a multi-channel connection capability (Multi-band Connection Capability) subfield (occupying 1 byte), an FST session timeout (Session Timeout) subfield (occupying 1 byte), a STA MAC address subfield (occupying 0 or 6 bytes), a pairwise cipher suite count (Pairwise Cipher Suite Count) subfield (occupying 0 or 2 bytes), and a pairwise cipher suite list (Pairwise Cipher Suite List) subfield (occupying 0 bytes or 4 * m bytes), where m is a positive integer.

The term "and/or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects. "A plurality of" in this application means two or more.

In the descriptions of this application, terms such as "first" and "second" are only for distinction and description, but cannot be understood as indicating or implying relative importance, or as indicating or implying an order. In addition, the word "example" in embodiments of this application is used to represent giving an example, an illustration, or a description. Any embodiment or implementation solution described as an "example" in this application should not be explained as being more preferred or having more advantages than another embodiment or implementation solution. Exactly, the word "example" is used to present a concept in a specific manner.

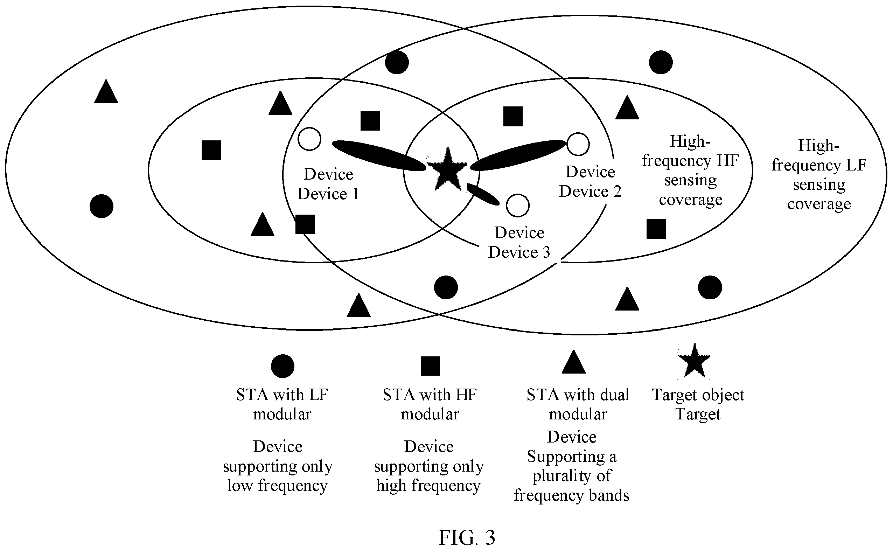

To facilitate understanding of embodiments of this application, a sensing system shown in FIG. 3 is used as an example to describe an application scenario used in this application. As shown in FIG. 3, the sensing process is mainly applied to an indoor wireless local area network scenario. A network of the indoor wireless local area network may include a device supporting only a low frequency (LF), a device supporting only a high frequency (HF), and a device supporting coordination between a high frequency and a low frequency (or a multi-band capable device). The sensing process is completed by at least two nodes. One node, for example, a first device 1 (device 1) in FIG. 3, is configured to "illuminate" an environment (which may also be referred to as an illuminator device, an illuminator node, or an initiator), that is, transmit an initial sensing signal. The sensing signal is reflected by a target object. Other nodes, for example, a second device (device 2) and a third device (device 3) in FIG. 3, sample the sensing signal and the reflected sensing signal (which may also be referred to as sensing devices, sensing nodes, WLAN sensing nodes, or participants), to complete sensing of the target object (Target shown in FIG. 3). In addition, FIG. 3 further shows LF sensing coverage (coverage) and HF sensing coverage. It can be learned that the LF sensing coverage is greater than the HF sensing coverage. The following briefly describes three possible sensing modes.

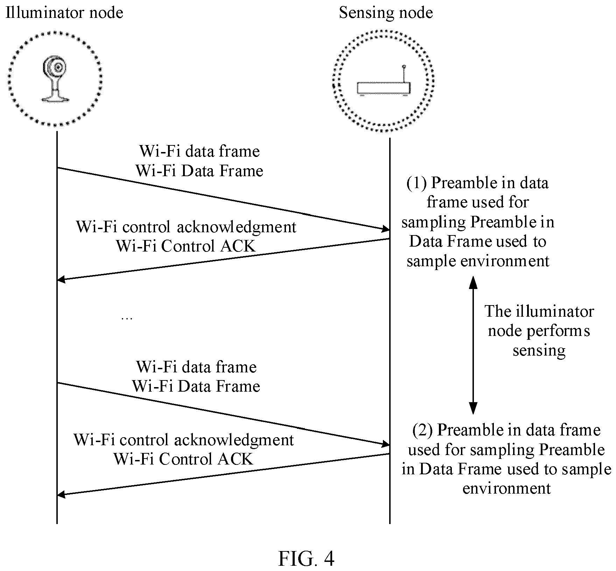

Mode 1: FIG. 4 shows a passive sensing process. An illuminator node (illuminator Node) sends a Wi-Fi data frame (Wi-Fi Data Frame), where the Wi-Fi data frame includes a preamble in a data frame (Preamble in Data Frame used to sample environment) used for sampling, and a sensing node (Wi-Fi sensing node) returns a Wi-Fi control acknowledgment (Wi-Fi Control ACK) for the received Wi-Fi data frame. This process is repeated for a plurality of times, and the illuminator node may perform sensing between a plurality of times of receiving a Wi-Fi control acknowledgment. In a passive sensing process, the sensing node does not perform any operation, and depends on data transmission between the sensing node and the lighting node. In the passive sensing process, the sensing node does not introduce any overhead, but the sensing node cannot control a rate and an occurrence of sensing of the illuminator node.

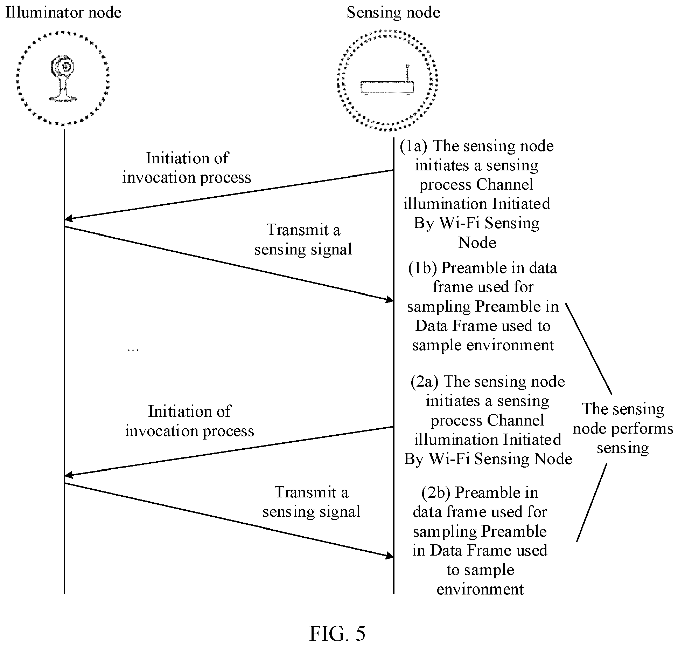

Mode 2: FIG. 5 shows a sensing invocation process. A sensing node initiates invocation (Initiation), and an illuminator node transmits a sensing signal. This process is repeated for a plurality of times, and the sensing node may perform sensing between a plurality of times of receiving a sensing signal. In the sensing invocation process, the sensing node sends a medium access control (medium access control, MAC) layer message to the illuminator node, to request the illuminator node to respond and "illuminate" an environment (Wi-Fi illumination). The sensing invocation process of the sensing node brings some overheads, but allows the sensing node to control a rate and an occurrence of sensing.

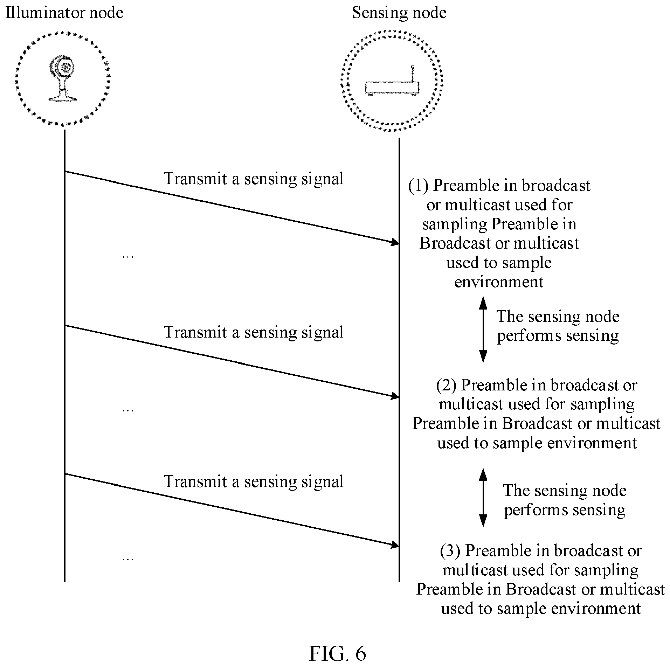

Mode 3: FIG. 6 shows a sensing pushing process. A plurality of nodes that enable WLAN sensing may interact with each other. In this process, broadcast or multicast messages are sent by nodes that enable WLAN sensing, to provide, for other nodes that enable WLAN sensing, an "illuminated" environment for detection and capture. The sensing pushing process is unidirectional transmission rather than bidirectional interaction. Therefore, there are fewer overheads compared with the mode 2, and control over a rate and an occurrence of sensing is allowed.

However, in the foregoing several modes, WLAN sensing is generally performed on only a low frequency or a high frequency, and fine sensing cannot be performed on a target object, resulting in a poor sensing result.

In view of this, to obtain a more precise sensing result for a target object, this application provides a method and an apparatus for sensing a target object. The method and the apparatus are based on a same technical concept. Principles by which the method and the apparatus resolve a problem are similar. Therefore, embodiments of the apparatus and the method may be cross-referenced. A repeated part is not described again. In the method, as an initiator, a first device senses a target object in a first frequency range of the first device, and sends an obtained first sensing result to a second device. The second device senses the target object in a second frequency range of the second device based on the first sensing result, to obtain a second sensing result; and sends the second sensing result to the first device. The first device determines status information of the target object based on the first sensing result and the second sensing result. Because the first frequency range is different from the second frequency range, finer sensing effect can be achieved by combining sensing results in at least two frequency ranges. If the first frequency range is a low frequency range, and the second frequency range is a high frequency range, a WLAN sensing process may be performed based on coordination between high and low frequencies. Because sensing results at high and low frequencies are shared, sensing on a high frequency may be performed based on the sensing result at the low frequency, thereby saving time of omnidirectional sweeping at the high frequency, effectively improving sensing coverage at the high frequency, and improving sensing precision.

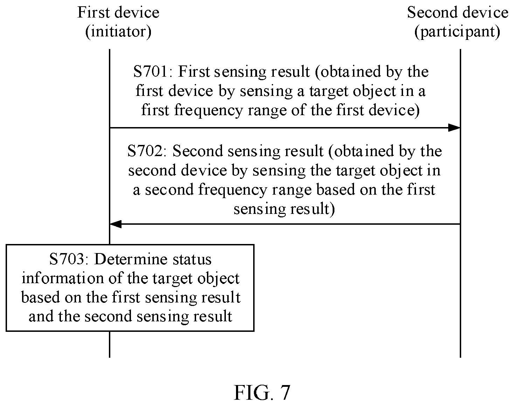

An embodiment of this application provides a method for sensing a target object. The method may be applied to the sensing system shown in FIG. 3. Refer to FIG. 7. The following describes in detail a specific process of the method for sensing a target object. As shown in FIG. 7, the process includes the following steps.

S701: A first device sends a first sensing result to a second device, and the second device receives the first sensing result, where the first sensing result is obtained by the first device by sensing a target object in a first frequency range of the first device.

The first device may include an LF module and an HF module. The LF module in the first device may sense the target object in the first frequency range. The first frequency range is a low frequency range of the first device. Optionally, the first frequency range may be within a 2.4 gigahertz (GHz) or 5 GHz frequency range of 802.11b/g/n/ac. For example, the first frequency range may include 2.4 GHz or 5 GHz. The first device (or the LF module in the first device) may sense an approximate area of the target object through omnidirectional sweeping within the first frequency range, where sensing coverage is larger. The HF module in the first device may sense the target object in a fourth frequency range. The fourth frequency range is a high frequency range of the first device. Optionally, the fourth frequency range may be within a frequency range between 57 GHz and 66 GHz of 802.1 1ad, or may be within a frequency range above 60 GHz of 802.11ad. For example, the fourth frequency range may include 60 GHz. Sensing coverage of the first device (or the HF module in the first device) in the fourth frequency range is limited, but sensing precision is higher.

The first sensing result includes one or more of the following information: a range between the target object and the first device, an angle of the target object relative to the first device, a velocity of the target object, or signal strength of the target object that is received by the first device.

Specifically, in S701, the first device may send a first instruction to the second device, where the first instruction carries the first sensing result, and the first instruction instructs the second device to sense the target object based on the first sensing result. Optionally, the first instruction may further include a second frequency range, the second frequency range may be a high frequency range of the second device, and the first instruction is specifically used to instruct the second device to sense the target object in the second frequency range based on the first sensing result. The first frequency range is different from the second frequency range. For a value of the second frequency range, refer to the following Table 1.

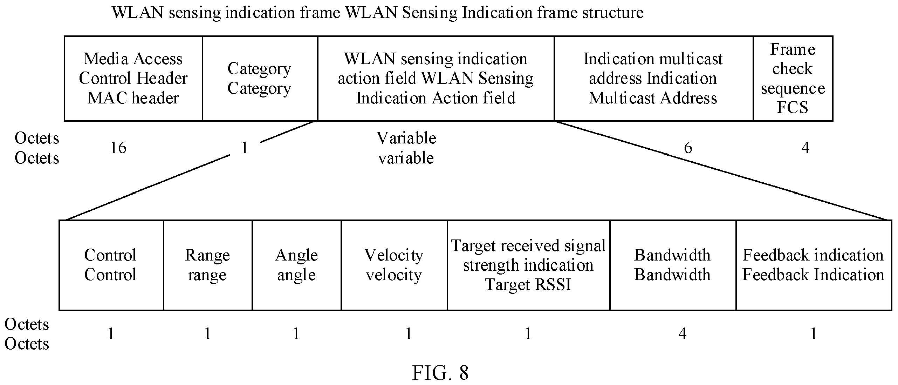

The first instruction may be a WLAN sensing indication frame (Indication frame). A frame structure of the WLAN sensing indication frame is a management frame structure newly designed in this application. As shown in FIG. 8, the WLAN sensing indication frame includes the following fields: a MAC header field (occupying 16 bytes), a category field (occupying 1 byte), a WLAN sensing indication action field (Indication Action field) (occupying an unfixed and variable quantity of bytes), a indication multicast address (Indication Multicast Address) field (occupying 6 bytes), and an FCS field (occupying 4 bytes). The WLAN sensing indication action field includes a control subfield (occupying 1 byte), a range (range) subfield (occupying 1 byte), an angle (angle) subfield (occupying 1 byte), a velocity (velocity) subfield (occupying 1 byte), a target (Target) received signal strength indicator (received signal strength indication, RSSI) subfield (occupying 1 byte), a channel bandwidth/frequency band bandwidth (Bandwidth) subfield (occupying 4 bytes), and a feedback indication (Feedback Indication) subfield (occupying 1 byte). The range subfield is used to indicate a range between the target object and the first device, the angle subfield is used to indicate an angle of the target object relative to the first device, the velocity subfield is used to indicate a velocity of the target object, and the target RSSI subfield is used to indicate signal strength of the target object that is received by the first device.

For a value of the bandwidth subfield, refer to the following Table 1. The bandwidth subfield is used to indicate a frequency range when a participant performs sensing. When the value of the bandwidth subfield is 0, it indicates that the indicated frequency range for performing sensing on the high frequency is 20 MHz (MHz). When the value of the bandwidth subfield is 1, it indicates that the indicated frequency range for performing sensing on the high frequency is 40 MHz. When the value of the bandwidth subfield is 2, it indicates that the indicated frequency range for performing sensing on the high frequency is 80 MHz. When the value of the bandwidth subfield is 3, it indicates that the indicated frequency range for performing sensing on the high frequency is 80 + 80 MHz or 160 MHz.

**Table 1**

| Bandwidth subfield value | Description (Description) |
|---|---|
| 0 | 20 MHz |
| 1 | 40 MHz |
| 2 | 80 MHz |
| 3 | 80 + 80 MHz or 160 MHz |

An initiator and a participant of the sensing process may negotiate a device for performing combination. For example, the device for performing combination may be the initiator, or the device for performing combination may be a participant. This is not limited in embodiments of this application. In embodiments of this application, an example in which the device for performing combination is the initiator is used for description. The initiator may further indicate a frequency band for fusing information feedback. The frequency band for fusing information feedback may indicate the participant to feed back the sensing result in a low frequency range or a high frequency range of the initiator, that is, a frequency range of the initiator (the first device) in which the participant (for example, the second device) feeds back the sensing result at the high frequency.

For a value of the feedback indication subfield, refer to the following Table 2. The feedback indication subfield is used to indicate the frequency band for fusing information feedback. When a value of the feedback indication subfield is 0, it indicates that the frequency band for fusing information feedback is the LF. When a value of the feedback indication subfield is 1, it indicates that the frequency band for fusing information feedback is the HF. When a value of the feedback indication subfield is 2, it indicates that the frequency band for fusing information feedback is the LF or the HF. When a value of the feedback indication subfield falls within 3 to 7, the subfield is reserved.

**Table 2**

| Feedback indication subfield value | Meaning (Meaning) |
|---|---|
| 0 | LF |
| 1 | HF |
| 2 | LF/HF |
| 3 to 7 | Reserved |

In this application, an OCT technology may be used to implement seamless switching of WLAN sensing between the high frequency band and the low frequency band, thereby saving frequency band switching time, improving a switching success rate, implementing information sharing between the high frequency band and the low frequency band, and obtaining information about the target object in more dimensions. Therefore, a sensing result of the target object is more accurate and precise. In addition, air transmission time is reduced, transmission overheads are reduced, and network performance is improved. Optionally, an indication multicast address field may indicate that OCT operation supports multicast/broadcast.

In an implementation, the first device may indicate the participant (for example, the second device) to sense the target object in a high frequency range of the participant (for example, the second frequency range of the second device).

For example, the LF module in the first device sends an OCT primitive (the WLAN sensing indication frame is encapsulated as a primitive of an OCT technology, for example, OCT. Indication) of the first instruction to the HF module in the first device, and the HF module in the first device sends the first instruction to an HF module in the second device.

For another example, the LF module in the first device sends the first instruction to an LF module in the second device, and the LF module in the second device sends the OCT primitive of the first instruction to an HF module in the second device.

In another implementation, the first device may sense the target object in the high frequency range (that is, the fourth frequency range) of the first device.

For example, the LF module in the first device sends the OCT primitive of the first instruction to the HF module of the first device.

In the step in S701, the instruction is encapsulated into the primitive in the OCT technology. For the process of encapsulating the instruction into the OCT primitive, refer to a subsequent encapsulation process of the WLAN sensing indication frame.

S702: The second device feeds back a second sensing result to the first device, and the first device receives the second sensing result fed back by the second device, where the second sensing result is obtained by the second device by sensing the target object in a second frequency range based on the first sensing result.

The first frequency range is different from the second frequency range. The second frequency range is a high frequency range of the second device. For example, the second frequency range may include 60 GHz; or for the second frequency range, refer to Table 1. The second frequency range may be indicated by the first device to the second device (for example, carried in the first instruction), or the second frequency range may be preset in the second device.

The initiator and the participant of the sensing process may negotiate a device for performing combination. For example, a negotiation result is that the initiator performs combination. Optionally, the initiator and the participant may further negotiate a frequency range in which combination is performed. For example, if a negotiation result is that combination is performed in the LF side or the HF side of the initiator, the participant in the sensing process feeds back the sensing result in the LF or the HF of the initiator.

In an implementation, after obtaining the second sensing result through sensing, the second device may actively send the second sensing result to the first device.

In another implementation, the second device may passively feed back the second sensing result based on an indication of the first device. For example, before S702, the first device sends third indication information, where the third indication information indicates the participant to feed back a sensing result, and the participant feeds back the sensing result to the first device based on the third indication information. Alternatively, the third indication information indicates participants to feed back sensing results in turn, and the participants feed back the sensing results in turn based on the third indication information.

If the third indication information indicates the participant to feed back the sensing result, the first device may send a fifth instruction to the participant, where the fifth instruction carries the third indication information.

The fifth instruction further includes one or more of the following information: indication information of a range between the target object and the participant (for example, the second device), indication information of an angle of the target object relative to the participant (for example, the second device), indication information of a velocity of the target object, indication information of a sector in which the target object is located, or indication information of a frequency band bandwidth. The indication information of the range between the target object and the participant is used to indicate the participant to feed back the range between the target object and the participant; the indication information of the angle of the target object relative to the participant is used to indicate the participant to feed back the angle of the target object relative to the participant; the indication information of the velocity of the target object is used to indicate the participant to feed back the velocity of the target object; the indication information of the sector in which the target object is located is used to indicate the participant to feed back the sector in which the target object is located; the indication information of the frequency band bandwidth indicates the participant to feed back the frequency band bandwidth on which the participant performs sensing.

The fifth instruction may be a WLAN sensing trigger frame, and the WLAN sensing trigger frame may be of a management frame structure newly designed in this application. For example, for a relationship between a value of a trigger type subfield (Trigger Type subfield value) and a trigger frame variant (Trigger frame variant) in the WLAN sensing trigger frame, refer to the following Table 3. When the value of the trigger type subfield is 0, the trigger frame variant is a basic (Basic) frame. When the value of the trigger type subfield is 1, the trigger frame variant is a beamforming report poll (Beamforming Report Poll) frame. When the value of the trigger type subfield is 2, the trigger frame variant is a multi-user block acknowledgment request (multi-user block acknowledgment request, MU-BAR). When the value of the trigger type subfield is 3, the trigger frame variant is a multi-user request to send (multi-user request to send, MU-RTS) frame. When the value of the trigger type subfield is 4, the trigger frame variant is a buffer status report poll (Buffer Status Report Poll, BSRP) frame. When the value of the trigger type subfield is 5, the trigger frame variant is a groupcast with retries multi-user block acknowledgment request (groupcast with retries MU-BAR, GCR MU-BAR). When the value of the trigger type subfield is 6, the trigger frame variant is a frequency band bandwidth query report poll (Bandwidth Query Report Poll) frame. When the value of the trigger type subfield is 7, the trigger frame variant is a neighbor discovery protocol (neighbor discovery protocol, NDP) feedback report poll (Feedback Report Poll) frame. When the value of the trigger type subfield is 8, the trigger frame variant is a WLAN sensing frame. When a value of the trigger type subfield falls within 9 to 15, the subfield is reserved.

**Table 3**

| Trigger Type subfield value | Trigger frame variant |
|---|---|
| 0 | Basic |
| 1 | Beamforming Report Poll |
| 2 | MU-BAR |
| 3 | MU-RTS |
| 4 | Buffer Status Report Poll |
| 5 | GCR MU-BAR |
| 6 | Bandwidth Query Report Poll |
| 7 | NDP Feedback Report Poll |
| 8 | WLAN Sensing |
| 9 to 15 | Reserved |

In a feedback (Feedback) phase, a WLAN sensing trigger frame may be defined in the reserved bits in Table 3, so that another device (for example, a participant) feeds back a sensing result instead of other information.

If the third indication information indicates the participant to feed back the sensing result in turn, the first device may send a fourth instruction to the participant, where the fourth instruction carries the third indication information.

The fourth instruction further includes one or more of the following information: sequence control information, timestamp control information, indication information of a range between the target object and the second device or the third device, indication information of an angle of the target object relative to the second device or the third device, indication information of a velocity of the target object, indication information of a sector in which the target object is located, or indication information of a frequency band bandwidth.

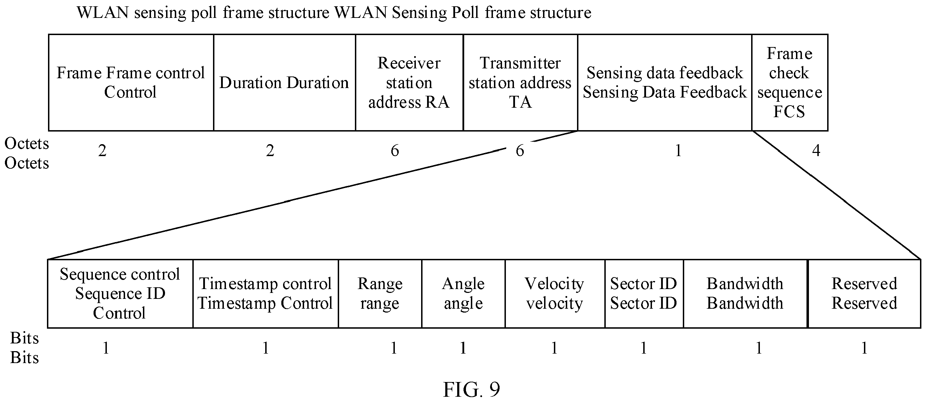

The fourth instruction may be a WLAN sensing poll frame. A frame structure of the WLAN sensing poll frame is a management frame structure newly designed in this application. For example, as shown in FIG. 9, the WLAN sensing poll frame includes the following fields: a frame control field (occupying 2 bytes), a sensing duration (Duration) field (occupying 2 bytes), a receiver station address (RA) field (occupying 6 bytes), a transmitter station address (TA) field (occupying 6 bytes), a sensing data feedback (Sensing Data Feedback) field (occupying 1 byte), and an FCS (occupying 4 bytes). The sensing data feedback field includes a sequence control (Sequence ID Control) subfield (occupying 1 bit), a timestamp control (Timestamp Control) subfield (occupying 1 bit), a range subfield (occupying 1 bit), an angle subfield (occupying 1 bit), a velocity subfield (occupying 1 bit), a sector ID (Sector ID) subfield (occupying 1 bit), a bandwidth subfield (occupying 1 bit), and a reserved field (occupying 1 bit). The range subfield may indicate indication information of a range between the target object and the participant. The angle subfield may indicate indication information of an angle of the target object relative to the participant. The velocity subfield may indicate moving indication information of a velocity of the target object. The sector ID subfield may indicate indication information of a sector of the target object. The bandwidth subfield may indicate indication information of a frequency band bandwidth.

When discovering another sensing device, the first device may further temporarily schedule or request the another sensing device to participate in an original sensing process (that is, a sensing process in which the first device and the second device are participating, or a sensing process in which the another sensing device does not participate). For example, if the first device detects that a third device supporting sensing exists near the target object, the first device may send first indication information to the third device, where the first indication information is used to schedule or request the third device to sense the target object, and the third device may receive the first indication information. The third device senses the target object in a third frequency range to obtain a third sensing result, and sends the third sensing result to the first device. The first device may receive the third sensing result. The third frequency range is a high frequency range of the third device. For example, the third frequency range may include 60 GHz; or for the third frequency range, refer to the foregoing Table 1. The third frequency range may be indicated by the first device to the third device, or the third frequency range may be preset in the third device. Sensing coverage of the third device (or an HF module in the third device) in the third frequency range is limited, but sensing precision is higher.

Specifically, the first device may send a second instruction to the third device, where the second instruction carries the first indication information. The second instruction further includes one or more of the following information: frequency band information, channel information, the first sensing result, feedback indication information, a role of the initiator (for example, including an AP or a STA), sensing duration, a sensing interval, or a sensing mode.

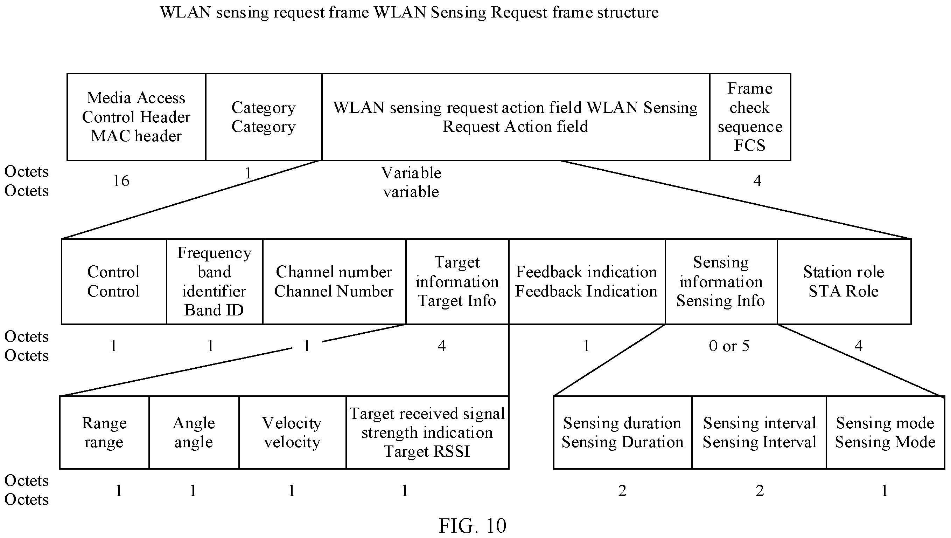

The second instruction may be a WLAN sensing request frame. A frame structure of the WLAN sensing request frame is a management frame structure newly designed in this application. For example, as shown in FIG. 10, the WLAN sensing request frame includes the following fields: a MAC header field (occupying 16 bytes), a category field (occupying 1 byte), a WLAN sensing request action field (occupying an unfixed and variable quantity of bytes), and an FCS field (occupying 4 bytes). The WLAN sensing request action field includes a control subfield (occupying 1 byte), a frequency band identifier (Band ID) subfield (occupying 1 byte), a channel number (Channel Number) subfield (occupying 1 byte), a target information (Target Info) subfield (occupying 4 bytes), a feedback indication subfield (occupying 1 byte), a sensing information (Sensing Info) subfield (occupying 0 or 5 bytes), and a STA role subfield (occupying 4 bytes). The Target Info subfield includes a range subfield (occupying 1 byte), an angle subfield (occupying 1 byte), a velocity subfield (occupying 1 byte), and a target RSSI subfield (occupying 1 byte). The sensing Info subfield includes a sensing duration subfield (occupying 2 bytes), a sensing interval subfield (occupying 2 bytes), and a sensing mode (Sensing mode) subfield (occupying 1 byte). After receiving the WLAN sensing request frame, a device (for example, the third device) temporarily scheduled participates in the current sensing process based on request information and performs sensing, and feeds back a sensing result to an information feedback combination side negotiated by the initiator and another device in advance.

A correspondence between a value of the STA role subfield and a STA role is shown in Table 4. When the value of the STA role subfield is 0, the STA role is an AP. When the value of the STA role subfield is 1, the STA role is a tunnel direct link setup (tunneled direct link setup, TDLS) STA. When the value of the STA role subfield is 2, the STA role is an IDSS STA. When the value of the STA role subfield is 3, the STA role is a pinhole control protocol (pinhole control protocol, PCP) device. When the value of the STA role subfield is 4, the STA role is non-PCP and not an AP. When the value of the STA role subfield falls within 5 to 7, the subfield is reserved.

**Table 4**

| STA Role subfield value | STA role |
|---|---|
| 0 | AP |
| 1 | TDLS STA |
| 2 | IBSS STA |
| 3 | PCP |
| 4 | Non-PCP and Non-AP STA |
| 5 to 7 | Reserved |

The sensing mode subfield may indicate a mode in which another temporarily scheduled device participates in sensing, including a passive (Passive) mode and/or a monostatic (Monostatic) mode.

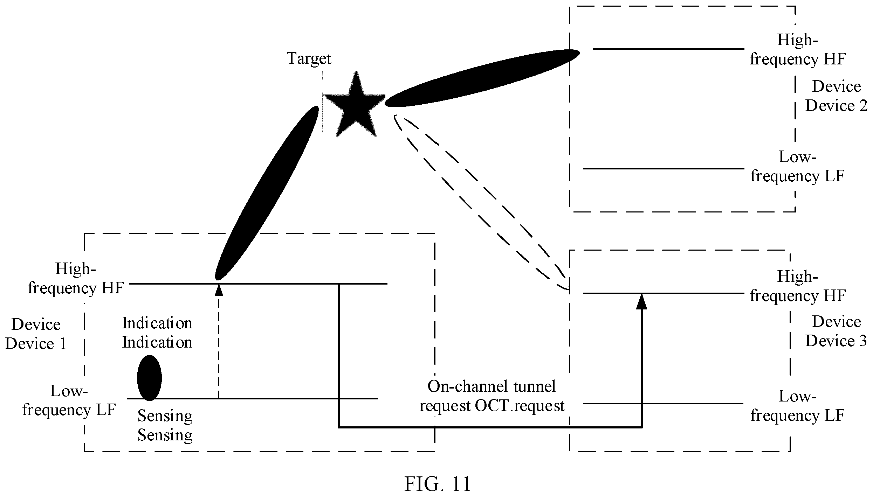

As shown in FIG. 11, when the third device is temporarily invoked to participate in sensing, if the high frequency of the first device is busy and location information of the target object detected by the first device at the low frequency cannot be sent to the third device, or a high frequency of the third device is sleeping and a signal cannot be received on the high frequency of the third device, the first device may encapsulate related information for requesting sensing of the third device into an on-channel tunnel request frame (that is, by using an OCT technology or via an OCT.request primitive), and send the request frame to the high frequency of the third device by using the low frequency of the first device. After receiving the on-channel tunnel request frame, the third device participates in the existing sensing process based on the request information.

If the third device participates in sensing in the monostatic mode, the first device may allocate a service period (service period, SP) to the third device, to schedule the third device to participate in the current sensing process, without affecting the current communication/sensing process, where the SP means a contention-free access period. The first device sends second indication information to the third device, where the second indication information is used to schedule the third device to a service period SP, and the SP is an SP of the second device, or an SP allocated to the third device. If the first device is an AP, the first device actively sends a poll frame (the poll frame is different from a subsequent WLAN sensing poll frame), and directly schedules the third device to an SP of the first device and/or the second device, or the first device allocates a new SP to the third device. If the first device is a STA, the third device may actively send a service period request (service period request, SPR) frame to an associated AP to apply for an extended SP. The third device sends first request information to the associated AP, where the first request information is used to request the associated AP to allocate an SP to the third device.

Optionally, the participant feeds back the sensing result to the first device, and the first device may receive the sensing result fed back by the participant. The sensing result fed back by the participant may be carried in a third instruction. The third instruction further includes one or more of the following information: a range between the target object and the participant, an angle of the target object relative to the participant, a velocity of the target object, a sector in which the target object is located, a frequency band bandwidth, or feedback indication information.

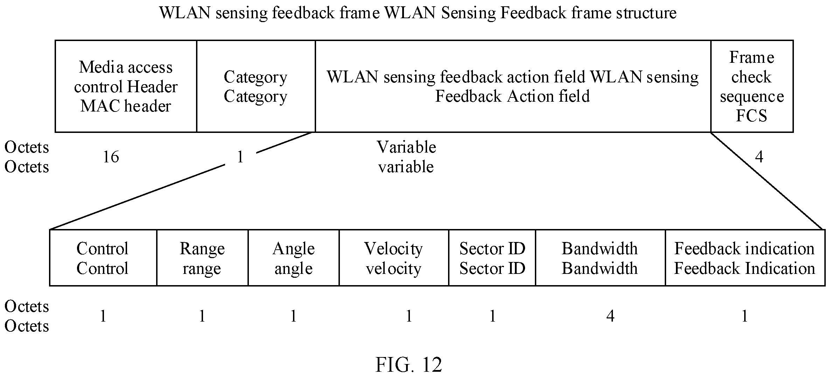

The third instruction may be a WLAN sensing feedback frame. A frame structure of the WLAN sensing feedback frame may be a management frame structure newly designed in this application. For example, as shown in FIG. 12, the WLAN sensing feedback frame includes the following fields: a MAC header field (occupying 16 bytes), a category field (occupying 1 byte), a WLAN sensing feedback action field (occupying an unfixed and variable quantity of bytes), and an FCS field (occupying 4 bytes). The WLAN sensing feedback action field includes a control subfield (occupying 1 byte), a range subfield (occupying 1 byte), an angle subfield (occupying 1 byte), a velocity subfield (occupying 1 byte), a sector ID subfield (occupying 1 byte), a bandwidth subfield (occupying 4 bytes), and a feedback indication subfield (occupying 1 byte).

If the third device participates in sensing in a passive mode, and there is no SP allocation, the third device only needs to listen to a channel at a specific time, to obtain the sensing result sent by the participant.

S703: The first device determines status information of the target object based on the first sensing result and the second sensing result.

Specifically, in S703, the first device may determine the status information of the target object based on the sensing result of the initiator and sensing results of all participants. If the third device is temporarily scheduled, in S703, the first device determines the status information of the target object based on the first sensing result, the second sensing result, and the third sensing result.

The status information of the target object includes but is not limited to the following information: location information of the target object, a velocity of the target object, and signal strength information of the target object.

It can be learned that in this application, in a management frame type, a newly designed WLAN sensing action frame structure is provided in this application. The management frame may be designed based on an action (Action) frame type, or may be a management frame of another type or a newly designed management frame. An action frame in this application is used as an example for description, but is not limited to the action frame. A new operation type WLAN sensing may be defined in a reserved bit of a category subfield in an action field in an action frame in a management frame, and a value of a WLAN sensing action field is added to indicate a frame type in WLAN sensing.

For example, a WLAN sensing action frame is defined in the second reserved bit in the category subfield, and the WLAN sensing action frame includes one or more of a WLAN sensing indication frame, a WLAN sensing request frame, a WLAN sensing feedback frame, a WLAN sensing trigger frame, a WLAN sensing poll frame, and the like that are newly designed. For example, the WLAN sensing indication frame, the WLAN sensing request frame, and the WLAN sensing feedback frame are defined in a second reserved bit of the category subfield. Refer to the following Table 5. When a value of the WLAN sensing action field is 0, it indicates that the frame is a WLAN sensing indication frame, and no time priority needs to be set. When a value of the WLAN sensing action field is 1, it indicates that the frame is a WLAN sensing request frame, and no time priority needs to be set. When a value of the WLAN sensing action field is 2, it indicates that the frame is a WLAN sensing feedback frame, and a time priority needs to be set (for example, a feedback priority when participants feed back sensing results). When a value of the WLAN sensing action field falls within 3 to 255, this field is reserved.

**Table 5**

| WLAN Sensing Action field value | Meaning | Time priority |
|---|---|---|
| 0 | WLAN Sensing Indication | No |
| 1 | WLAN Sensing Request | No |
| 2 | WLAN Sensing Feedback | Yes |
| 3 to 255 | Reserved | - |

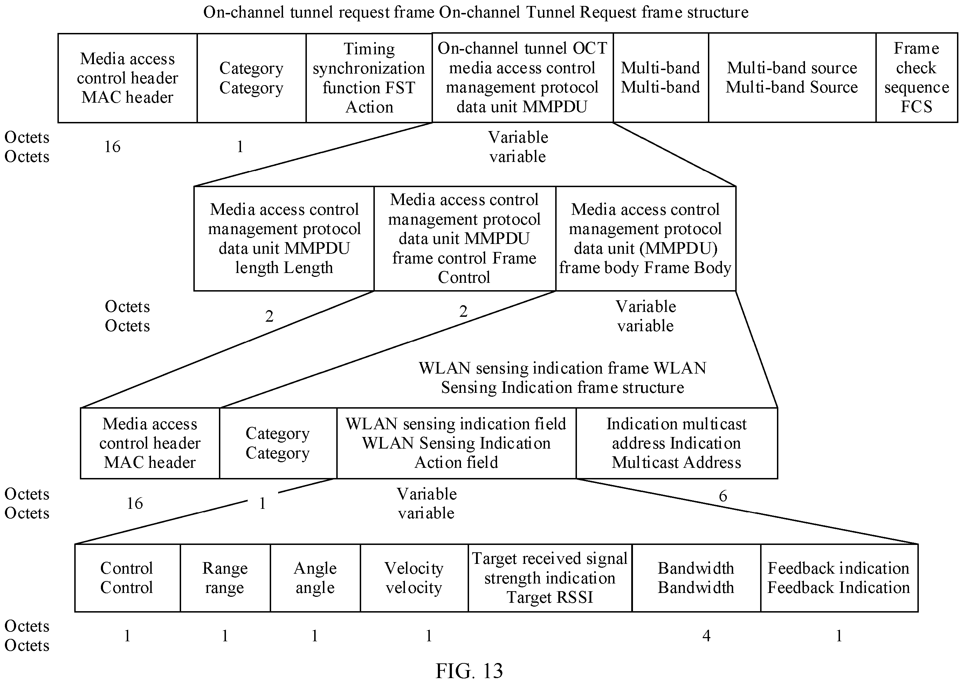

The newly designed frame may be directly transmitted over the air (that is, may be directly transmitted via an air interface), or may be encapsulated in an on-channel tunnel request frame for transmission. FIG. 13 shows a possible encapsulation process of a WLAN sensing indication frame according to this application. An encapsulated on-channel tunnel request frame includes the following fields: a MAC header field (occupying 16 bytes), a category field (occupying 1 byte), an FST action field, an OCT MMPDU field (occupying an unfixed and variable quantity of bytes), a multi-band field, a multi-band source field, and an FCS field (occupying 4 bytes). The OCT MMPDU field includes an MMPDU length subfield (occupying 2 bytes), an MMPDU frame control subfield (occupying 2 bytes), and an MMPDU frame body subfield (occupying an unfixed and variable quantity of bytes). The MMPDU frame control sub-field includes a MAC header subfield (occupying 16 bytes). The MMPDU frame body subfield includes category subfield (occupying 1 byte), WLAN sensing indication action field subfield (occupying an unfixed and variable quantity of bytes), and indication multicast address subfield (occupying 6 bytes). The WLAN sensing indication action field subfield includes a control subfield (occupying 1 byte), a range subfield (occupying 1 byte), an angle subfield (occupying 1 byte), a velocity subfield (occupying 1 byte), a target RSSI subfield (occupying 1 byte), a bandwidth subfield (occupying 4 bytes), and a feedback indication subfield (occupying 1 byte). For an encapsulation process of another frame, refer to the encapsulation process of the WLAN sensing indication frame. Details are not described herein again.

In embodiments of this application, as the initiator of the sensing process, the first device may first sense the target object in the first frequency range of the first device, and send the first sensing result to the second device. The second device senses the target object in the second frequency range of the second device based on the first sensing result, to obtain the sensing result. The first frequency range is different from the second frequency range. In this way, the first device can combine sensing results in at least two frequency ranges, to obtain a more precise sensing result. In addition, the first device may perform WLAN sensing based on coordination between high and low frequencies. Because sensing results at high and low frequencies are shared, sensing on the high frequency may be performed based on the sensing result at the low frequency, thereby saving time of omnidirectional sweeping at the high frequency, effectively improving sensing coverage at the high frequency, and improving sensing precision.

A process of sensing a target object is described by using the following specific embodiments. The following embodiments all include a scenario in which another device is temporarily invoked to participate in sensing. In the following embodiments, a feedback information transmission manner (transmitted on an HF or an LF), an information feedback combination side (combination on an HF side or an LF side of an initiator), a role of the initiator (an AP or a STA), and a sensing mode (Passive or Monostatic) in which the temporarily invoked device participates in sensing are different.

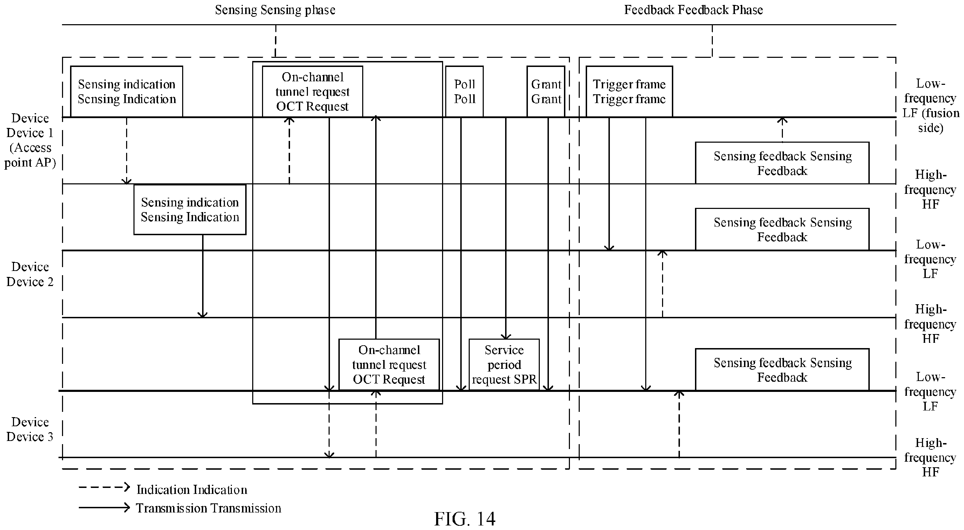

Embodiment 1: Refer to FIG. 14. In a sensing process in this embodiment of this application, transmission is performed on the LF, combination is performed on the LF side of the initiator, the initiator is an AP, and a third device participates in sensing in a monostatic mode. The sensing process includes the following steps.

In a sensing phase, an LF of a first device (device 1) (serving as the initiator) first senses a surrounding environment to obtain a first sensing result (the first sensing result includes a rough sensing result or a sensing result of a target object at a low frequency), and sends the first sensing result (WLAN sensing indication frame) to an HF of the device 1 via an OCT primitive (shown by a dashed line, and referred to as OCT.Indication below). The HF of the device 1 forwards the frame to an HF of a second device (device 2) through air transmission (as shown by a solid line). The HF of the device 1, and the HF of the device 2 may all perform directional fine beam sweeping based on the first sensing result.

It is assumed that the initiator needs to temporarily invoke a third device (device 3) to participate in the sensing process. If the HF of the device 1 is busy (for example, the HF of the device 1 is performing sensing or is performing communication), and the device 3 does not know target location information at this time, or an HF of the device 3 is sleeping and cannot receive information sent by the device 1, related information of a sensing request (WLAN Sensing Request frame) may be sent by the HF of the device 1 to the LF of the device 1 via an OCT primitive (hereinafter referred to as OCT.Request), then sent by the LF of the device 1 to an LF of the device 3, and sent by the LF of the device 3 to the HF of the device 3 via the OCT.Request. The device 3 participates in the sensing process based on the related information of the sensing request (as shown in the box in the figure).

When the device 3 participates in sensing in the monostatic mode, if the device 1 is an AP, the device 1 actively sends a poll frame to schedule the device 3 to an SP of the device 1 and the device 2, or allocates a new SP to the device 3. If the device 1 is a STA, the device 3 may actively send an SPR frame to an associated AP to apply for an extended SP. The device 3 is scheduled to participate in the existing WLAN sensing process, so that the device 3 does not affect the original communication/sensing process.

It is assumed that when performing sensing, the device 1 and the device 2 determines, through negotiation, that sensing information is combined on the LF/HF side of the device 1. In this case, the device 3 performs feedback based on a negotiation result of the device 1 and the device 2, that is, the device 3 feeds back a third sensing result to the LF/HF side of the device 1.

In a feedback phase, if feedback information is transmitted via the LF, and combination is performed on the LF side of the device 1, the device 1 may send a WLAN sensing trigger frame, to trigger the device 2 and the device 3 to perform feedback. The device 2 and the device 3 indicate, via OCT.Indication, their LFs to directly send WLAN sensing feedback frames to the LF of the device 1, that is, in a manner of combining trigger and orthogonal frequency division multiple access (orthogonal frequency division multiple access, OFDMA)/uplink multi-user multiple-input multiple-output (uplink multi-user multiple-input multiple-output, UL MU-MIMO).

For the temporarily invoked device, namely, device 3, if in the sensing phase, an OCT Request interframe space is greater than or equal to time needed by the device 3 for the sensing process, the device 3 may further encapsulate the third sensing result into an OCT request/OCT response frame and directly feed back the third sensing result to the device 1, so that the sensing result can be fed back in a timely and efficient manner without modifying a standard protocol.

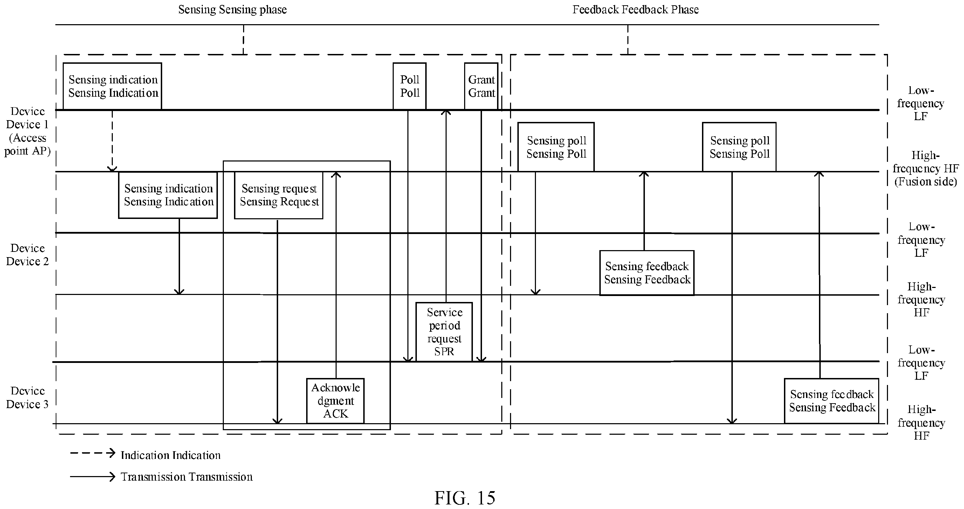

Embodiment 2: Refer to FIG. 15. In a sensing process in this embodiment of this application, transmission is performed on the HF, combination is performed on the HF side of the initiator, the initiator is an AP, and a third device participates in sensing in a monostatic mode. The sensing process includes the following steps.

In a sensing phase, an LF of a device 1 (serving as the initiator) first senses a surrounding environment to obtain a first sensing result, and sends the first sensing result (WLAN sensing indication frame) to an HF of the device 1 via an OCT primitive (shown by a dashed line, and referred to as OCT.Indication below). The HF of the device 1 forwards the frame to an HF of a device 2 through air transmission (as shown by a solid line). The HF of the device 1, and the HF of the device 2 may all perform directional fine beam sweeping based on the first sensing result.

It is assumed that the initiator needs to temporarily invoke a device 3 to participate in the sensing process. If both the HF of the device 1 and an HF of the device 3 are idle, the HF of the device 1 directly transmits related information of a sensing request (WLAN Sensing Request frame) to the device 3 over the air, and the device 3 participates in an existing sensing process based on the related information of the sensing request (as shown in the box in the figure).

If the device 1 is an AP, the device 1 actively sends a poll frame, and directly schedules the device 3 to an SP of the device 1 and the device 2 or allocates a new SP to the device 3. The device 1 schedules the device 3 to participate in the existing WLAN sensing process, so that the original communication/sensing process is not affected.

It is assumed that when performing sensing, the device 1 and the device 2 determines, through negotiation, that sensing information is combined on the LF/HF side of the device 1. In this case, the device 3 performs feedback based on a negotiation result of the device 1 and the device 2.

In the feedback phase, if the feedback information is transmitted on the HF and combined on the HF side of the device 1, the HF of the device 1 may send a WLAN sensing poll frame, to indicate the HF of the device 2 and the HF of the device 3 to directly send WLAN sensing feedback frames to the HF of the device 1 in turn.

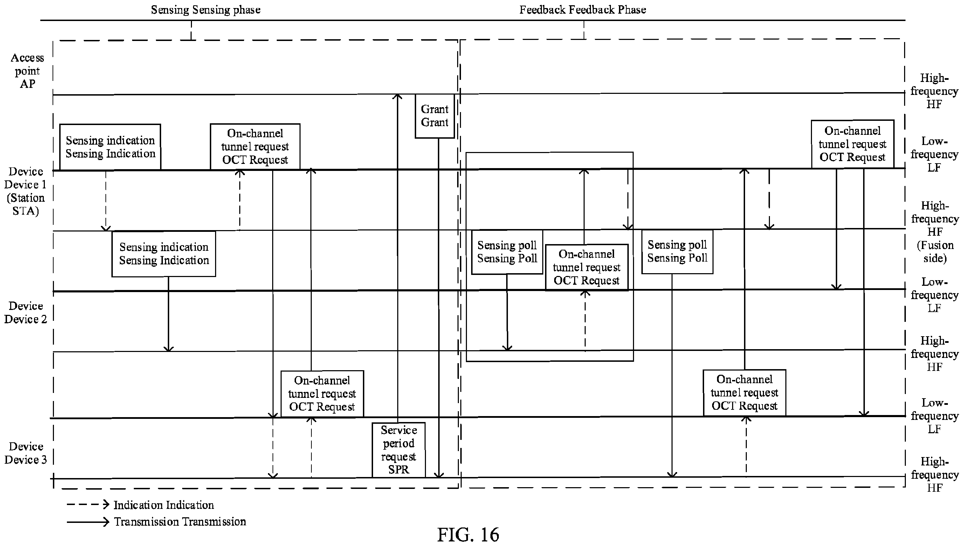

Embodiment 3: Refer to FIG. 16. In a sensing process in this embodiment of this application, transmission is performed on the LF, combination is performed on the HF side of the initiator, the initiator is a STA, and a third device participates in sensing in a monostatic mode. The sensing process includes the following steps.

In a sensing phase, an LF of a device 1 first senses a surrounding environment to obtain a first sensing result, and sends the first sensing result (WLAN sensing indication frame) to an HF of the device 1 via an OCT primitive (shown by a dashed line, and referred to as OCT.Indication below). The HF of the device 1 forwards the frame to an HF of a device 2 through air transmission (as shown by a solid line). The HF of the device 1, and the HF of the device 2 may all perform directional fine beam sweeping based on the first sensing result.

It is assumed that the initiator needs to temporarily invoke a device 3 to participate in the sensing process. If the HF of the device 1 is busy, and the device 3 does not know target location information at this time, or an HF of the device 3 is sleeping and cannot receive information sent by the device 1, related information of a sensing request (WLAN Sensing Request frame) may be sent by the HF of the device 1 to the LF of the device 1 via an OCT primitive (hereinafter referred to as OCT.Request), then sent by the LF of the device 1 to an LF of the device 3, and sent by the LF of the device 3 to the HF of the device 3 via the OCT.Request. The device 3 participates in the existing sensing process based on the related information of the sensing request (as shown in the box in the figure).

When the device 3 participates in sensing in the monostatic mode, if the device 1 is a STA, the device 3 may actively send an SPR frame to an associated AP to apply for an extended SP, and the associated AP allocates a new SP to the device 3. The device 3 is scheduled to participate in the existing WLAN sensing process, so that the device 3 does not affect the original communication/sensing process.

It is assumed that when performing sensing, the device 1 and the device 2 determines, through negotiation, that sensing information is combined on the LF/HF side of the device 1. In this case, the device 3 performs feedback based on a negotiation result of the device 1 and the device 2.

In a feedback phase, if feedback information is transmitted via the LF, and combination is performed on the HF side of the device 1, the HF of the device 1 may send a WLAN sensing poll frame, and the HF of the device 2 and the HF of the device 3 encapsulate a sensing result a WLAN sensing feedback frame into an on-channel tunnel request frame for feedback.

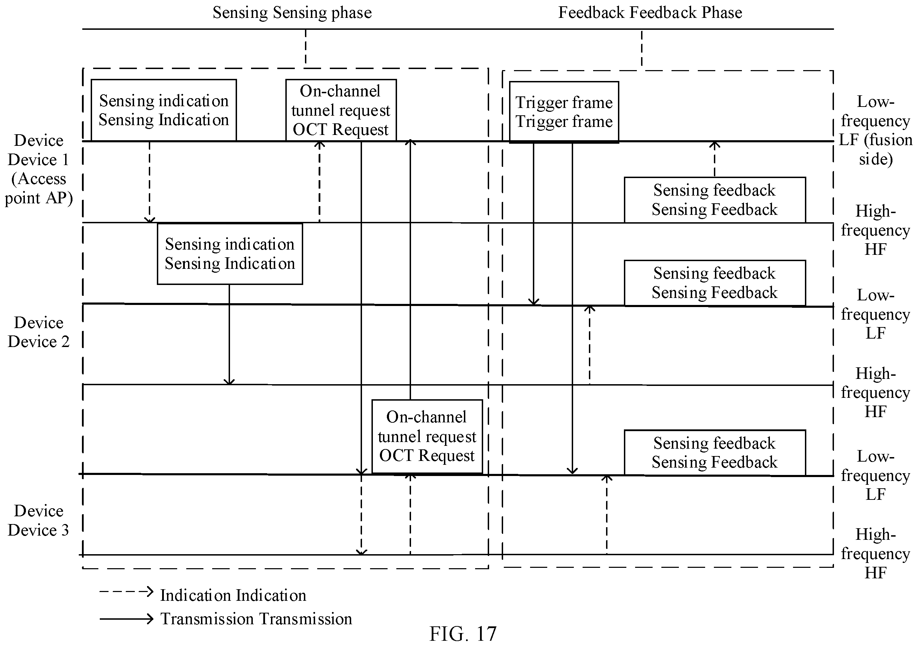

Embodiment 4: Refer to FIG. 17. In a sensing process in this embodiment of this application, an example in which transmission is performed on the LF, combination is performed on the LF side of the initiator, the initiator is an AP, and a third device participates in sensing in a passive mode is used for description. The sensing process includes the following steps.

In a sensing phase, an LF of a device 1 first senses a surrounding environment to obtain a first sensing result, and sends the first sensing result (WLAN sensing indication frame) to an HF of the device 1 via an OCT primitive (shown by a dashed line, and referred to as OCT.Indication below). The HF of the device 1 forwards the frame to an HF of a device 2 through air transmission (as shown by a solid line). The HF of the device 1, and the HF of the device 2 may all perform directional fine beam sweeping based on the first sensing result.

It is assumed that the initiator needs to temporarily invoke a device 3 to participate in the sensing process. If the HF of the device 1 is busy, and the device 3 does not know target location information at this time, or an HF of the device 3 is sleeping and cannot receive information sent by the device 1, related information of a sensing request (WLAN Sensing Request frame) may be sent by the HF of the device 1 to the LF of the device 1 via an OCT primitive (hereinafter referred to as OCT.Request), then sent by the LF of the device 1 to an LF of the device 3, and sent by the LF of the device 3 to the HF of the device 3 via the OCT.Request. The device 3 participates in the existing sensing process based on the related information of the sensing request. When the device 3 participates in sensing in a passive mode, the device 3 only needs to listen to a channel at a specific time, and does not need to allocate an SP to the device 3.

It is assumed that when performing sensing, the device 1 and the device 2 determines, through negotiation, that sensing information is combined on the LF/HF side of the device 1. In this case, the device 3 performs feedback based on a negotiation result of the device 1 and the device 2.

In a feedback phase, if the device 1 is an AP, feedback information is transmitted via the LF, and combination is performed on the LF side of the device 1, the device 1 may send a WLAN sensing trigger frame, to trigger the device 2 and the device 3 to perform feedback. The device 2 and the device 3 indicate, via OCT.Indication, their LFs to directly send WLAN sensing feedback frames to the LF of the device 1, that is, in a manner of combining trigger and OFDMA/LTL MU-MIMO.

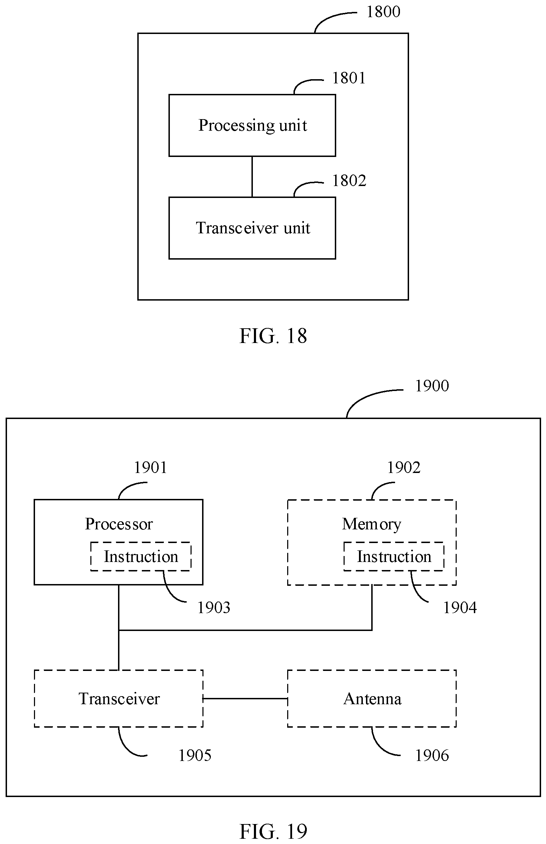

The foregoing describes in detail the method for sensing the target object in embodiments of this application. Based on a same inventive concept as the foregoing method for sensing a target object, an embodiment of this application further provides an apparatus for sensing a target object. As shown in FIG. 18, the apparatus for sensing a target object includes a processing unit 1801 and a transceiver unit 1802, and the apparatus 1800 may be configured to implement the method described in the foregoing method embodiments applied to a device.

In an embodiment, the apparatus 1800 is applied to a first device, where the first device is an initiator of a sensing process.

Specifically, the transceiver unit 1802 is configured to: send a first sensing result to a second device, where the first sensing result is obtained by the first device by sensing a target object in a first frequency range; and receive a second sensing result fed back by the second device, where the second sensing result is obtained by the second device by sensing the target object in a second frequency range based on the first sensing result, and the first frequency range is different from the second frequency range.

The processing unit 1801 is configured to determine status information of the target object based on the first sensing result and the second sensing result.

In an implementation, the first frequency range is a low frequency range of the first device, and the second frequency range is a high frequency range of the second device.

In an implementation, the transceiver unit 1802 is further configured to: send first indication information to a third device, where the first indication information is used to invoke or request the third device to sense the target object; and receive a third sensing result fed back by the third device, where the third sensing result is obtained by the third device by sensing the target object in a third frequency range, and the third frequency range is different from the first frequency range.

In an implementation, the third frequency range is a high frequency range of the third device.

In an implementation, the transceiver unit 1802 is further configured to: before receiving the third sensing result fed back by the third device, send second indication information to the third device, where the second indication information is used to schedule the third device to an SP, and the SP is an SP of the second device or an SP allocated to the third device.

In an implementation, the transceiver unit 1802 is further configured to send third indication information to the second device and the third device, where the third indication information indicates the second device and the third device to feed back sensing results, or the third device indication information indicates the second device and the third device to feed back sensing results in turn.

In an implementation, the first sensing result includes one or more of the following information: a range between the target object and the first device, an angle of the target object relative to the first device, a velocity of the target object, or signal strength of the target object that is received by the first device.

In an implementation, the transceiver unit 1802 is specifically configured to send a first instruction, where the first instruction carries the first sensing result, and the first instruction instructs a participant to sense the target object based on the first sensing result.

The first instruction may further carry the second frequency range and/or the third frequency range.

In an implementation, the transceiver unit 1802 is specifically configured to send a second instruction to the third device, where the second instruction carries the first indication information.

The second instruction may further include one or more of the following information: frequency band information, channel information, the first sensing result, feedback indication information, a role of the first device, sensing duration, a sensing interval, or a sensing mode.

In an implementation, the transceiver unit 1802 is specifically configured to receive a third instruction sent by the second device and/or the third device, where the third instruction carries the second sensing result of the second device and/or the third sensing result of the third device.

The third instruction may further include one or more of the following information: a range between the target object and the second device and/or the third device, an angle of the target object relative to the second device and/or the third device, a velocity of the target object, a sector in which the target object is located, a frequency band bandwidth, or feedback indication information.

In an implementation, the transceiver unit 1802 is specifically configured to send a fourth instruction to the second device and/or a third device, where the fourth instruction carries the third indication information, and the fourth instruction instructs the second device and the third device to feed back sensing results in turn.

The fourth instruction may further include one or more of the following information: sequence control information, timestamp control information, indication information of a range between the target object and the second device and/or the third device, indication information of an angle of the target object relative to the second device and/or the third device, indication information of a velocity of the target object, indication information of a sector in which the target object is located, or indication information of a frequency band bandwidth.

In an implementation, the transceiver unit 1802 is specifically configured to send a fifth instruction to the second device and/or the third device, where the fifth instruction carries the third indication information, and the fourth instruction instructs the second device and/or the third device to feed back a sensing result.

The fifth instruction may further include one or more of the following information: indication information of a range between the target object and the second device and/or the third device, indication information of an angle of the target object relative to the second device and/or the third device, indication information of a velocity of the target object, indication information of a sector in which the target object is located, or indication information of a frequency band bandwidth.

In another embodiment, the apparatus 1800 is applied to a second device, where the second device is a participant in a sensing process.

Specifically, the processing unit 1801 is configured to: receive a first sensing result via the transceiver unit 1802, where the first sensing result is obtained by the first device by sensing a target object in a first frequency range; and feed back a second sensing result, where the second sensing result is obtained by the second device by sensing the target object in the second frequency range based on the first sensing result, and the first frequency range is different from the second frequency range.

In an implementation, the first frequency range is a low frequency range of the first device, and the second frequency range is a high frequency range of the second device.

In an implementation, the transceiver unit 1802 is further configured to: before feeding back the second sensing result to the first device, receive third indication information from the first device, where the third indication information indicates the second device to feed back the sensing result, or indicates the second device and a third device to feed back sensing results in turn.

In an implementation, the first sensing result includes one or more of the following information: a range between the target object and the first device, an angle of the target object relative to the first device, a velocity of the target object, or signal strength of the target object that is received by the first device.

In an implementation, the transceiver unit 1802 is specifically configured to receive a first instruction, where the first instruction carries the first sensing result, the first instruction carries the first sensing result, and the first instruction instructs the second device to sense the target object based on the first sensing result.

The first instruction may further carry a frequency range of the second device.

In an implementation, the transceiver unit 1802 is specifically configured to send a third instruction to the first device, where the third instruction carries the second sensing result.

The third instruction may further include one or more of the following information: a range between the target object and the second device, an angle of the target object relative to the second device, a velocity of the target object, a sector in which the target object is located, a frequency band bandwidth, or feedback indication information.

In an implementation, the transceiver unit 1802 is specifically configured to receive a fourth instruction, where the fourth instruction carries the third indication information, and the fourth instruction instructs the second device and the third device to feed back sensing results in turn.

The fourth instruction may further include one or more of the following information: sequence control information, timestamp control information, indication information of a range between the target object and the second device, indication information of an angle of the target object relative to the second device, indication information of a velocity of the target object, indication information of a sector in which the target object is located, or indication information of a frequency band bandwidth.

In an implementation, the transceiver unit 1802 is specifically configured to receive a fifth instruction, where the fifth instruction carries the third indication information, and the fifth instruction instructs the second device to feed back a sensing result.

The fifth instruction may further include one or more of the following information: indication information of a range between the target object and the second device, indication information of an angle of the target object relative to the second device, indication information of a velocity of the target object, indication information of a sector in which the target object is located, or indication information of a frequency band bandwidth.

In still another embodiment, the apparatus 1800 is applied to a third device, where the second device is a temporarily scheduled participant in a sensing process.

Specifically, the processing unit 1801 is configured to: receive first indication information via the transceiver unit 1802, where the first indication information is used to invoke or request the third device to perform sensing; and feed back a third sensing result to the first device, where the third sensing result is obtained by the third device by sensing a target object in a third frequency range.

In an implementation, the third frequency range is a high frequency range of the third device.

In an implementation, the transceiver unit 1802 is further configured to: before feeding back the third sensing result to the first device, receive second indication information from the first device, where the second indication information is used to schedule the third device to an SP, and the SP is an SP of the second device or an SP allocated to the third device.

In an implementation, the transceiver unit 1802 is further configured to: before feeding back the third sensing result to the first device, send first request information to an AP, where the first request information is used to request the AP to allocate an SP to the third device, and the AP is associated with the third device, that is, the AP is an associated AP of the third device.

In an implementation, the transceiver unit 1802 is further configured to: before feeding back the third sensing result to the first device, receive third indication information from the first device, where the third indication information indicates the third device to feed back the sensing result, or the third device indication information indicates the second device and the third device to feed back sensing results in turn.

In an implementation, the transceiver unit 1802 is specifically configured to receive a fourth instruction, where the fourth instruction carries the third indication information, and the fourth instruction instructs the second device and the third device to feed back sensing results in turn.

The fourth instruction may further include one or more of the following information: sequence control information, timestamp control information, indication information of a range between the target object and the second device and/or the third device, indication information of an angle of the target object relative to the second device and/or the third device, indication information of a velocity of the target object, indication information of a sector in which the target object is located, or indication information of a frequency band bandwidth.

In an implementation, the transceiver unit 1802 is specifically configured to receive a fifth instruction, where the fifth instruction carries the third indication information, and the fifth instruction instructs the third device to feed back a sensing result.

The fifth instruction may further include one or more of the following information: indication information of a range between the target object and the second device and/or the third device, indication information of an angle of the target object relative to the second device and/or the third device, indication information of a velocity of the target object, indication information of a sector in which the target object is located, or indication information of a frequency band bandwidth.

In an implementation, the first sensing result includes one or more of the following information: a range between the target object and the first device, an angle of the target object relative to the first device, a velocity of the target object, or signal strength of the target object that is received by the first device.

It should be noted that in embodiments of this application, division into modules is an example, and is only a logical function division. During actual implementation, there may be another division manner. In addition, functional units in embodiments of this application may be integrated into one processing unit, or may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same concept as the foregoing method for sensing a target object, as shown in FIG. 19, an embodiment of this application further provides a schematic diagram of a structure of an apparatus 1900 for sensing a target object. The apparatus 1900 may be configured to implement the method described in the foregoing method embodiments applied to a device. For details, refer to the description in the foregoing method embodiments.

The apparatus 1900 includes one or more processors 1901. The processor 1901 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The communication apparatus may include a transceiver unit, configured to input (receive) and output (send) a signal. For example, the transceiver unit may be a transceiver or a radio frequency chip.

The communication apparatus 1900 includes the one or more processors 1901, and the one or more processors 1901 may implement the method of the device in the foregoing embodiments.

Optionally, the processor 1901 may further implement another function in addition to the method in the foregoing embodiments.

Optionally, in a design, the processor 1901 may execute instructions, so that the apparatus 1900 performs the method described in the foregoing method embodiments. All or some of the instructions, for example, instructions 1903, may be stored in the processor, or all or some of the instructions, for example, instructions 1904, may be stored in a memory 1902 coupled to the processor. Alternatively, the apparatus 1900 may be enabled, by using both the instructions 1903 and the instructions 1904, to perform the method described in the foregoing method embodiments.

In still another possible design, the communication apparatus 1900 may further include a circuit, and the circuit may implement a function in the foregoing method embodiments.

In still another possible design, the apparatus 1900 may include one or more memories 1902. The memory stores instructions 1904, and the instructions may be run on the processor, the apparatus 1900 is enabled to perform the method described in the foregoing method embodiments. Optionally, the memory may further store data. Optionally, the processor may also store instructions and/or data. For example, the one or more memories 1902 may store the correspondence described in the foregoing embodiments, or the related parameter or table in the foregoing embodiments. The processor and the memory may be separately disposed, or may be integrated together.

In still another possible design, the apparatus 1900 may further include a transceiver 1905 and an antenna 1906. The processor 1901 may be referred to as a processing unit, and controls the apparatus (a terminal or a base station). The transceiver 1905 may be referred to as a transceiver, a transceiver circuit, the transceiver unit, or the like, and is configured to implement a transceiver function of the apparatus by using the antenna 1906.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (Digital Signal Processor, DSP), an application specific integrated circuit (Application Specific Integrated Circuit, ASIC), a field programmable gate array (Field Programmable Gate Array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by means of a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

An embodiment of this application further provides a communication system. The system includes the foregoing first device and second device. The first device and the second device are configured to implement the method for sensing a target object according to any one of the foregoing method embodiments.

Optionally, the system may further include a third device.

An embodiment of this application further provides a computer-readable medium. The computer-readable medium stores a computer program. When the computer program is executed by a computer, the method for sensing a target object in any one of the foregoing method embodiments is implemented.

An embodiment of this application further provides a computer program product. When the computer program product is executed by a computer, the method for sensing a target object in any one of the foregoing method embodiments is implemented.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), a semiconductor medium (for example, a solid-state drive (Solid State Disk, SSD)), or the like.

An embodiment of this application further provides a processing apparatus, including a processor and an interface. The processor is configured to perform the method for sensing a target object according to any one of the foregoing method embodiments.

It should be understood that the processing apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be properly defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. A disk (Disk) and a disc (disc) used in this application include a compact disc (CD), a laser disc, an optical disc, a digital versatile disc (DVD), a floppy disk, and a Blu-ray disc, where the disk generally copies data in a magnetic manner, and the disc copies data optically in a laser manner. The foregoing combination should also be included in the protection scope of the computer-readable medium.

In conclusion, the foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

## Claims

1. A method for sensing a target object, comprising:
sending, by a first device, a first sensing result to a second device, wherein the first sensing result is obtained by the first device by sensing the target object in a first frequency range;
receiving, by the first device, a second sensing result fed back by the second device, wherein the second sensing result is obtained by the second device by sensing the target object in a second frequency range based on the first sensing result, and the first frequency range is different from the second frequency range; and
determining, by the first device, status information of the target object based on the first sensing result and the second sensing result.

2. The method according to claim 1, wherein the first frequency range is a low frequency range of the first device, and the second frequency range is a high frequency range of the second device.

3. The method according to claim 1 or 2, wherein the method further comprises:
sending, by the first device, first indication information to a third device, wherein the first indication information is used to invoke or request the third device to sense the target object; and
receiving, by the first device, a third sensing result fed back by the third device, wherein the third sensing result is obtained by the third device by sensing the target object in a third frequency range, and the third frequency range is different from the first frequency range; and
the determining, by the first device, status information of the target object based on the first sensing result and the second sensing result comprises:
determining, by the first device, the status information of the target object based on the first sensing result, the second sensing result, and the third sensing result.

4. The method according to claim 3, wherein the third frequency range is a high frequency range of the third device.

5. The method according to claim 3 or 4, wherein before the receiving, by the first device, a third sensing result fed back by the third device, the method further comprises:
sending, by the first device, second indication information to the third device, wherein the second indication information is used to schedule the third device to a service period SP, and the SP is an SP of the second device, or an SP allocated to the third device.

6. The method according to any one of claims 3 to 5, further comprising:
sending, by the first device, third indication information to the second device and the third device, wherein the third indication information indicates the second device and the third device to feed back sensing results.

7. The method according to any one of claims 1 to 6, wherein the first sensing result comprises one or more of the following information: a range between the target object and the first device, an angle of the target object relative to the first device, a velocity of the target object, or signal strength of the target object that is received by the first device.

8. The method according to any one of claims 1 to 7, wherein the sending, by a first device, a first sensing result to a second device comprises:
sending, by the first device, a first instruction to the second device, wherein the first instruction carries the first sensing result and the second frequency range, and the first instruction instructs the second device to sense the target object in the second frequency range based on the first sensing result.

9. The method according to claim 8, wherein the first instruction further comprises feedback indication information, and the feedback indication information indicates whether the second device feeds back the second sensing result in a high frequency range or the low frequency range of the first device.

10. The method according to any one of claims 3 to 6, wherein the sending, by the first device, first indication information to a third device comprises:
sending, by the first device, a second instruction to the third device, wherein the second instruction carries the first indication information;
the second instruction further comprises one or more of the following information: frequency band information, channel information, the first sensing result, feedback indication information, a role of the first device, sensing duration, a sensing interval, or a sensing mode.

11. The method according to any one of claims 1 to 10, wherein the receiving, by the first device, a second sensing result fed back by the second device comprises:
receiving, by the first device, a third instruction sent by the second device, wherein the third instruction carries the second sensing result; and
the third instruction further comprises one or more of the following information: a range between the target object and the second device, an angle of the target object relative to the second device, a velocity of the target object, a sector in which the target object is located, a frequency band bandwidth, or feedback indication information.

12. The method according to any one of claims 6 to 10, wherein the sending, by the first device, third indication information to the second device and the third device comprises:
sending, by the first device, a fourth instruction to the second device and the third device, wherein the fourth instruction carries the third indication information, and the fourth instruction instructs the third device and the second device to feed back sensing results in turn; and
the fourth instruction further comprises one or more of the following information: sequence control information, timestamp control information, indication information of a range between the target object and the second device or the third device, indication information of an angle of the target object relative to the second device or the third device, indication information of a velocity of the target object, indication information of a sector in which the target object is located, or indication information of a frequency band bandwidth.

13. The method according to any one of claims 6 to 10, wherein the sending, by the first device, third indication information to the second device and the third device comprises:
sending, by the first device, a fifth instruction to the second device and the third device, wherein the fifth instruction carries the third indication information, and the fifth instruction instructs the second device and the third device to feed back sensing results;
the fifth instruction further comprises one or more of the following information: indication information of a range between the target object and the second device or the third device, indication information of an angle of the target object relative to the second device or the third device, indication information of a velocity of the target object, indication information of a sector in which the target object is located, or indication information of a frequency band bandwidth.

14. A method for sensing a target object, comprising:
receiving, by a second device, a first sensing result, wherein the first sensing result is obtained by a first device by sensing the target object in a first frequency range; and
feeding back, by the second device, a second sensing result to the first device, wherein the second sensing result is obtained by the second device by sensing the target object in a second frequency range based on the first sensing result, and the first frequency range is different from the second frequency range.

15. The method according to claim 14, wherein the first frequency range is a low frequency range of the first device, and the second frequency range is a high frequency range of the second device.

16. The method according to claim 14 or 15, wherein before the feeding back, by the second device, a second sensing result to the first device, the method further comprises:
receiving, by the second device, third indication information from the first device, wherein the third indication information indicates the second device to feed back the sensing result.

17. The method according to any one of claims 14 to 16, wherein the first sensing result comprises one or more of the following information: a range between the target object and the first device, an angle of the target object relative to the first device, a velocity of the target object, or signal strength of the target object that is received by the first device.

18. The method according to any one of claims 14 to 17, wherein the receiving, by a second device, a first sensing result comprises:
receiving, by the second device, a first instruction, wherein the first instruction carries the first sensing result and the second frequency range, and the first instruction instructs the second device to sense the target object in the second frequency range based on the first sensing result.

19. The method according to claim 18, wherein the first instruction further comprises feedback indication information, and the feedback indication information indicates whether the second device feeds back the second sensing result in a high frequency range or the low frequency range of the first device.

20. The method according to any one of claims 14 to 19, wherein the feeding back, by the second device, a second sensing result to the first device comprises:
sending, by the second device, a third instruction to the first device, wherein the third instruction carries the second sensing result, wherein
the third instruction further comprises one or more of the following information: a range between the target object and the first device, an angle of the target object relative to the first device, a velocity of the target object, a sector in which the target object is located, a frequency band bandwidth, or feedback indication information.

21. The method according to any one of claims 16 to 20, wherein the receiving, by the second device, third indication information from the first device comprises:
receiving, by the second device, a fourth instruction from the first device, wherein the fourth instruction carries the third indication information, and the fourth instruction instructs the second device and the third device to feed back sensing results in turn; and
the fourth instruction further comprises one or more of the following information: sequence control information, timestamp control information, indication information of a range between the target object and the second device or the third device, indication information of an angle of the target object relative to the second device or the third device, indication information of a velocity of the target object, indication information of a sector in which the target object is located, or indication information of a frequency band bandwidth.

22. The method according to any one of claims 16 to 20, wherein the receiving, by the second device, third indication information from the first device comprises:
receiving, by the second device, a fifth instruction from the first device, wherein the fifth instruction carries the third indication information, and the fifth instruction instructs the second device to feed back a sensing result, wherein
the third instruction further comprises one or more of the following information: indication information of a range between the target object and the second device, indication information of an angle of the target object relative to the second device, indication information of a velocity of the target object, indication information of a sector in which the target object is located, or indication information of a frequency band bandwidth.

23. An apparatus for sensing a target object, comprising a processor and a memory, wherein the processor is coupled to the memory;
the memory is configured to store a computer program; and
a processor, configured to execute the computer program stored in the memory, so that the apparatus performs the method according to any one of claims 1 to 13, or performs the method according to any one of claims 14 to 22.

24. A computer-readable storage medium, comprising a program or instructions, wherein when the program or the instructions is or are run on a computer, the method according to any one of claims 1 to 13 or the method according to any one of claims 14 to 22 is performed.

25. A processing apparatus, comprising a processor and an interface, wherein the processor is configured to perform the method according to any one of claims 1 to 13 or the method according to any one of claims 14 to 22.

26. A computer program product, wherein the computer program product stores a computer program or instructions; and when the computer program or the instructions is or are run on a computer, the method according to any one of claims 1 to 13 or the method according to any one of claims 14 to 22 is performed.

27. An apparatus, wherein the apparatus is configured to perform the method according to any one of claims 1 to 13 or the method according to any one of claims 14 to 22.
